# EUROPEAN PATENT APPLICATION

(11) **EP 4 822 975 A1**
(43) Date of publication of application: **14.10.2026**
(21) Application number: 25736207.9
(22) Date of filing: 02.01.2025
(51) Int. Cl.: H02M 3/28, H02M 3/335, H02M 3/00, H02M 1/00

(54) **POWER CONVERSION APPARATUS AND CONTROL METHOD THEREFOR**

(30) Priority: 05.01.2024 CN 202410024605
(71) Applicant: Huawei Digital Power Technologies Co., Ltd., Shenzhen, Guangdong 518043 (CN)
(72) Inventor: CHEN, Dong, Shenzhen, Guangdong 518043 (CN); RONG, Xianliang, Shenzhen, Guangdong 518043 (CN); SHI, Lei, Shenzhen, Guangdong 518043 (CN)
(74) Representative: Isarpatent
(86) International application number: PCT/CN2025/070283
(87) International publication number: WO 2025/146106

(57) **Abstract**

This application provides a power conversion apparatus and a control method therefor. The power conversion apparatus includes a first bridge arm, a second bridge arm, a transformer, and a controller. The first bridge arm includes a first switching transistor and a second switching transistor, and the second bridge arm includes a third switching transistor and a fourth switching transistor. The first bridge arm and the second bridge arm are connected in parallel, and a midpoint of the first bridge arm and a midpoint of the second bridge arm are respectively connected to two ends of a primary-side winding or two ends of a secondary-side winding of the transformer. The first switching transistor is connected to the third switching transistor. The controller controls, based on a result of comparison between electrical data of the transformer and a threshold, the power conversion apparatus to switch between a first working mode and a second working mode. In the first working mode, a phase of the fourth switching transistor lags behind a phase of the first switching transistor by a first phase angle. In the second working mode, the phase of the first switching transistor lags behind the phase of the fourth switching transistor by a second phase angle. In this way, the transformer can basically bear no bias, to protect the power conversion apparatus.

## Description

This application claims priority to Chinese Patent Application No. 202410024605.8, filed with the China National Intellectual Property Administration on January 5, 2024 and entitled "POWER CONVERSION APPARATUS AND CONTROL METHOD THEREFOR", which is incorporated herein by reference in its entirety.

### TECHNICAL FIELD

This application relates to the field of power supply technologies, and in particular, to a power conversion apparatus and a control method therefor.

### BACKGROUND

A dual active bridge (dual active bridge, DAB) converter can implement electrical isolation between an input and an output, has advantages such as high power density and ease of implementing soft switching, and can meet requirements of various application scenarios for conversion between a direct current voltage and a direct current voltage and between a direct current voltage and an alternating current voltage. Therefore, DAB converters have been widely used.

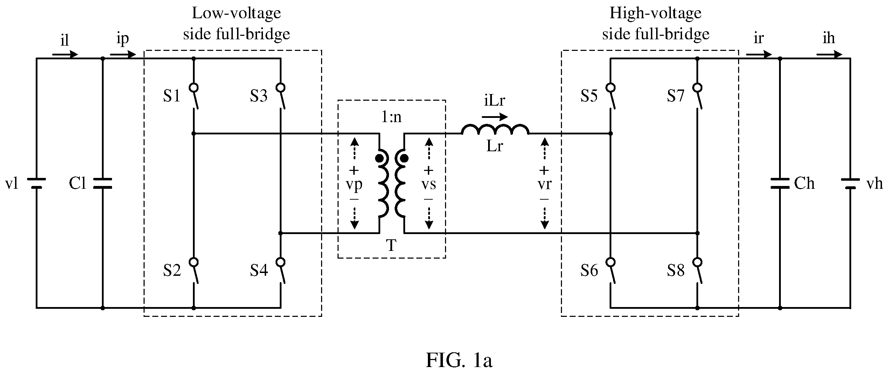

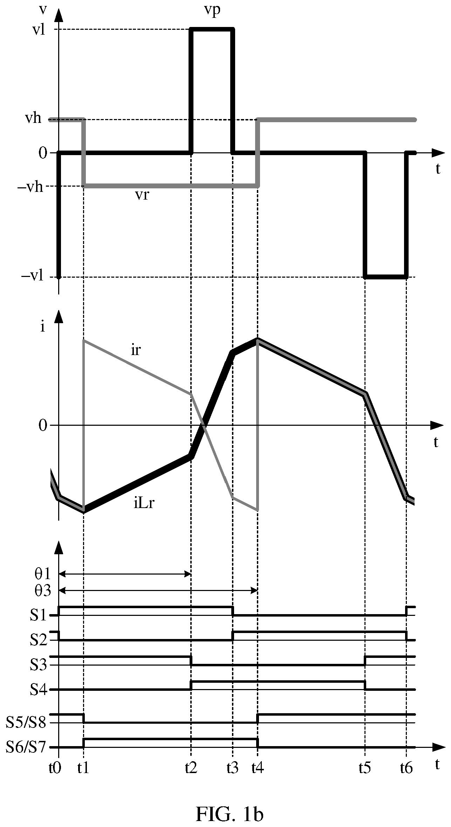

A conventional DAB converter mainly uses a circuit structure shown in FIG. 1a. As shown in FIG. 1a, the DAB converter mainly includes a low-voltage side full-bridge, a transformer T, an inductor Lr, and a high-voltage side full-bridge. The low-voltage side full-bridge includes a first bridge arm and a second bridge arm that are connected in parallel, and the high-voltage side full-bridge includes a third bridge arm and a fourth bridge arm that are connected in parallel. The first bridge arm includes a switch S1 and a switch S2 that are connected in series, the second bridge arm includes a switch S3 and a switch S4 that are connected in series, the third bridge arm includes a switch S5 and a switch S6 that are connected in series, and the fourth bridge arm includes a switch S7 and a switch S8 that are connected in series. For the DAB converter shown in FIG. 1a, the DAB converter may be controlled by adjusting a switching frequency, a phase angle between the first bridge arm and the second bridge arm (for example, a phase difference between a phase of the switch S1 and a phase of the switch S4), a phase angle between the third bridge arm and the fourth bridge arm (for example, a phase difference between a phase of the switch S5 and a phase of the switch S8), and a phase angle between the third bridge arm and the first bridge arm (for example, a phase difference between the phase of the switch S1 and the phase of the switch S5). For example, when the phase angle between the third bridge arm and the fourth bridge arm is 0, a diagram of voltage and current waveforms of the DAB converter is shown in FIG. 1b. The DAB converter adjusts the switching frequency fs, the phase angle θ1 between the first bridge arm and the second bridge arm, and the phase angle θ3 between the third bridge arm and the first bridge arm, to output power.

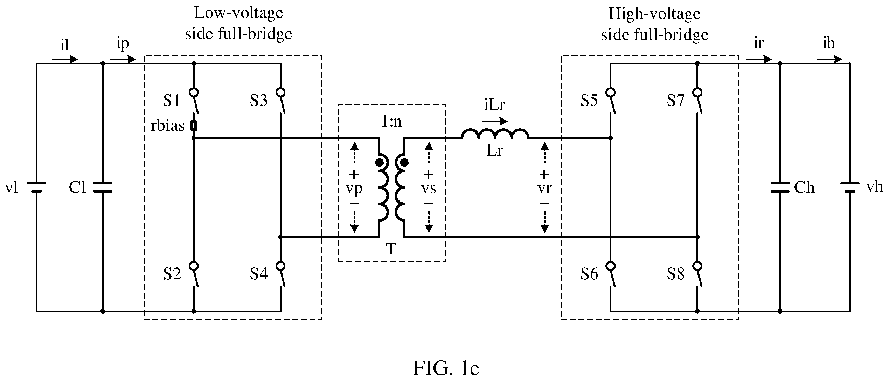

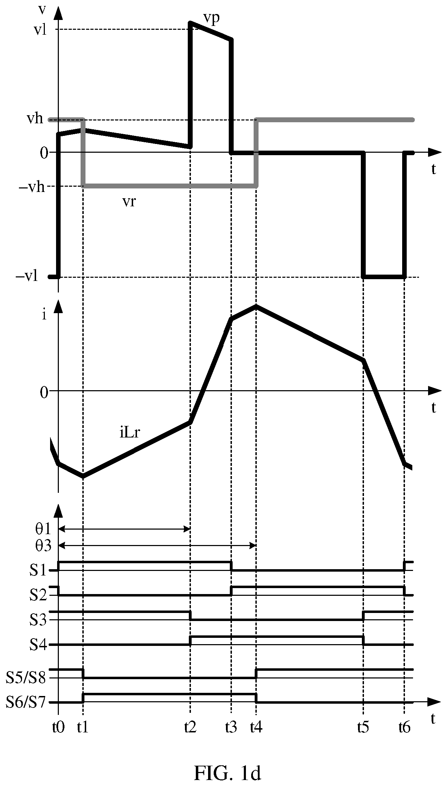

In an actual physical circuit, each component has a specific initial deviation. For example, a nominal value of on-resistance of a switching transistor is x Ω, but actual on-resistance may range from 80%*x Ω to 120%*x Ω. As shown in FIG. 1c, on-resistance of S1 in the DAB converter is increased by bias resistance rbias. When the DAB converter shown in FIG. 1c uses the switching frequency fs, the phase angle θ1 between the first bridge arm and the second bridge arm, the phase angle 0 between the third bridge arm and the fourth bridge arm, and the phase angle θ3 between the third bridge arm and the first bridge arm shown in FIG. 1b, a diagram of voltage and current waveforms of the DAB converter shown in FIG. 1c is shown in FIG. 1d. In a time interval from t0 to t2, the switch S1 is turned on, and because the on-resistance of S1 is increased by rbias and a current iLr of the inductor Lr is a negative value, a primary-side voltage vp of the transformer T has a specific positive bias compared with a primary-side voltage vp shown in FIG. 1b. In a time interval from t2 to t3, the switch S1 remains turned on, and because the on-resistance of the switch S1 is increased by rbias, the primary-side voltage vp of the transformer T also has a specific bias.

In conclusion, it may be learned that in a time interval from t0 to t3, namely, a time interval in which the switch S1 is turned on, the primary-side voltage vp of the transformer T has an overall specific positive bias, and the transformer T is subjected to a unidirectional bias. This may result in saturation of the transformer T and cause the transformer T to fail to work. In severe cases, this may cause the DAB converter to fail and even be damaged.

### SUMMARY

This application provides a power conversion apparatus and a control method therefor, so that a transformer can basically bear no bias, to protect the power conversion apparatus.

According to a first aspect, this application provides a power conversion apparatus. The power conversion apparatus is configured to be connected between a direct current power supply and a power grid or a load for energy conversion. The power conversion apparatus includes a first bridge arm, a second bridge arm, a transformer, and a controller. The transformer includes a primary-side winding and a secondary-side winding. The first bridge arm includes a first switching transistor and a second switching transistor that are connected in series, and the second bridge arm includes a third switching transistor and a fourth switching transistor that are connected in series. The first bridge arm and the second bridge arm are connected in parallel, and a midpoint of the first bridge arm and a midpoint of the second bridge arm are respectively connected to two ends of the primary-side winding or two ends of the secondary-side winding. The first switching transistor is connected to the third switching transistor. The controller is configured to: control, when electrical data of the transformer is greater than a threshold and a phase of the fourth switching transistor lags behind a phase of the first switching transistor by a first phase angle, the phase of the first switching transistor to lag behind the phase of the fourth switching transistor by a second phase angle; and control, when the electrical data of the transformer is less than or equal to the threshold and the phase of the first switching transistor lags behind the phase of the fourth switching transistor by the second phase angle, the phase of the fourth switching transistor to lag behind the phase of the first switching transistor by the first phase angle. Both the first phase angle and the second phase angle are greater than or equal to 0° and less than or equal to 180°. The electrical data of the transformer includes an input voltage, an input current, an output voltage, or an output current of the transformer.

In this implementation, when it is determined, based on the electrical data of the transformer, that a voltage bias occurs in the transformer, the power conversion apparatus controls the power conversion apparatus to switch between a first working mode (that is, the phase of the fourth switching transistor lags behind the phase of the first switching transistor by the first phase angle) and a second working mode (that is, the phase of the first switching transistor lags behind the phase of the fourth switching transistor by the second phase angle), so that when the voltage bias occurs in the transformer, a lead-lag relationship between the first bridge arm and the second bridge arm is reversed before and after mode switching. Therefore, an amplitude and a shape of a current waveform of an inductor in the power conversion apparatus remain unchanged before and after mode switching, but there is a different phase relative to the first bridge arm, so that a voltage bias borne by the transformer after mode switching is opposite to a voltage bias borne by the transformer before mode switching, to cancel the voltage bias borne by the transformer before mode switching, so as to avoid saturation of the transformer and protect the power conversion apparatus.

With reference to the first aspect, in a first possible implementation, the first phase angle is the same as the second phase angle.

In this implementation, because the second phase angle is the same as the first phase angle, it indicates that there is always a same phase angle between the first bridge arm and the second bridge arm before and after working mode switching. Therefore, it can be ensured that the current waveform of the inductor does not change before and after working mode switching of the power conversion apparatus, thereby not affecting normal working of the power conversion apparatus.

With reference to the first aspect or the first possible implementation of the first aspect, in a second possible implementation, the power conversion apparatus further includes a third bridge arm. The midpoint of the first bridge arm and the midpoint of the second bridge arm are respectively connected to the two ends of the primary-side winding, and a midpoint of the third bridge arm is connected to the secondary-side winding. Alternatively, the midpoint of the first bridge arm and the midpoint of the second bridge arm are respectively connected to the two ends of the secondary-side winding, and a midpoint of the third bridge arm is connected to the primary-side winding. The third bridge arm includes a fifth switching transistor and a sixth switching transistor that are connected in series. The controller is configured to: control, when the electrical data of the transformer is greater than the threshold, the phase of the fourth switching transistor lags behind the phase of the first switching transistor by the first phase angle, and a phase of the fifth switching transistor lags behind the phase of the first switching transistor by a third phase angle, the phase of the first switching transistor to lag behind the phase of the fourth switching transistor by the second phase angle and the phase of the fifth switching transistor to lag behind the phase of the fourth switching transistor by a fourth phase angle; and control, when the electrical data of the transformer is less than or equal to the threshold, the phase of the first switching transistor lags behind the phase of the fourth switching transistor by the second phase angle, and the phase of the fifth switching transistor lags behind the phase of the fourth switching transistor by the fourth phase angle, the phase of the fourth switching transistor to lag behind the phase of the first switching transistor by the first phase angle and the phase of the fifth switching transistor to lag behind the phase of the first switching transistor by the third phase angle.

In this implementation, the power conversion apparatus ensures that a master-slave relationship between the third bridge arm and a main bridge arm remains unchanged before and after mode switching, thereby not affecting normal working of the power conversion apparatus. The main bridge arm is a main bridge arm in the first bridge arm and the second bridge arm, is the first bridge arm when the power conversion apparatus is in the first working mode, and is the second bridge arm when the power conversion apparatus is in the second working mode.

With reference to the second possible implementation of the first aspect, in a third possible implementation, the third phase angle is the same as the fourth phase angle.

In this implementation, because the second phase angle is the same as the first phase angle, and the fourth phase angle is the same as the third phase angle, it indicates that there is always a same phase angle between the first bridge arm and the second bridge arm and always a same phase angle between the third bridge arm and the main bridge arm before and after working mode switching. Therefore, it can be ensured that a voltage waveform of the power conversion apparatus does not change before and after working mode switching of the power conversion apparatus, and the current waveform of the inductor does not change before and after working mode switching of the power conversion apparatus, thereby not affecting normal working of the power conversion apparatus.

With reference to the second possible implementation of the first aspect or the third possible implementation of the first aspect, in a fourth possible implementation, the power conversion apparatus further includes an inductor. The inductor and the primary-side winding or the secondary-side winding are connected in series between the midpoint of the first bridge arm and the midpoint of the second bridge arm, or the inductor and the primary-side winding or the secondary-side winding are connected in series and then connected to the midpoint of the third bridge arm.

With reference to the fourth possible implementation of the first aspect, in a fifth possible implementation, the power conversion apparatus further includes a first resonant capacitor and a second resonant capacitor. The first resonant capacitor and the second resonant capacitor are connected in series and then connected in parallel to the third bridge arm. The two ends of the primary-side winding are respectively connected to the midpoint of the first bridge arm and the midpoint of the second bridge arm, and the secondary-side winding and the inductor are connected in series between the midpoint of the third bridge arm and a capacitor midpoint. The capacitor midpoint is a connection point between the first resonant capacitor and the second resonant capacitor.

In this implementation, the first resonant capacitor, the second resonant capacitor, and the inductor form a resonant circuit, so that the power conversion apparatus is a resonant power conversion apparatus, and a current waveform of the inductor tends to be a sine wave. This helps reduce a peak value of a current flowing on a switching transistor in the power conversion apparatus, and helps the switching transistor in the power conversion apparatus implement soft switching, to reduce a loss of the switching transistor, thereby improving efficiency of the power conversion apparatus.

With reference to the fourth possible implementation of the first aspect, in a sixth possible implementation, the power conversion apparatus further includes a first resonant capacitor and a second resonant capacitor. The first resonant capacitor and the second resonant capacitor are connected in series and then connected in parallel to the third bridge arm. The primary-side winding and the inductor are connected in series between the midpoint of the first bridge arm and the midpoint of the second bridge arm, and the two ends of the secondary-side winding are respectively connected to the midpoint of the third bridge arm and a capacitor midpoint. The capacitor midpoint is a connection point between the first resonant capacitor and the second resonant capacitor.

In this implementation, the first resonant capacitor, the second resonant capacitor, and the inductor form a resonant circuit, so that the power conversion apparatus is a resonant power conversion apparatus, and a current waveform of the inductor tends to be a sine wave. This helps reduce a peak value of a current flowing on a switching transistor in the power conversion apparatus, and helps the switching transistor in the power conversion apparatus implement soft switching, to reduce a loss of the switching transistor, thereby improving efficiency of the power conversion apparatus. In addition, in addition to being connected in series to the secondary-side winding, the inductor may be further connected in series to the primary-side winding. The power conversion apparatus has diversified structures and high flexibility.

With reference to the fourth possible implementation of the first aspect, in a seventh possible implementation, the power conversion apparatus further includes a first resonant capacitor and a second resonant capacitor. The first resonant capacitor and the second resonant capacitor are connected in series and then connected in parallel to the third bridge arm. The two ends of the primary-side winding are respectively connected to the midpoint of the third bridge arm and a capacitor midpoint, and the secondary-side winding and the inductor are connected in series between the midpoint of the first bridge arm and the midpoint of the second bridge arm. The capacitor midpoint is a connection point between the first resonant capacitor and the second resonant capacitor.

In this implementation, the first resonant capacitor, the second resonant capacitor, and the inductor form a resonant circuit, so that the power conversion apparatus is a resonant power conversion apparatus, and a current waveform of the inductor tends to be a sine wave. This helps reduce a peak value of a current flowing on a switching transistor in the power conversion apparatus, and helps the switching transistor in the power conversion apparatus implement soft switching, to reduce a loss of the switching transistor, thereby improving efficiency of the power conversion apparatus. In addition, in addition to being connected to the secondary-side winding, the third bridge arm may be further connected to the primary-side winding. The power conversion apparatus has diversified structures and high flexibility.

With reference to the fourth possible implementation of the first aspect, in an eighth possible implementation, the power conversion apparatus further includes a first resonant capacitor and a second resonant capacitor. The first resonant capacitor and the second resonant capacitor are connected in series and then connected in parallel to the third bridge arm. The primary-side winding and the inductor are connected in series between the midpoint of the third bridge arm and a capacitor midpoint, and the two ends of the secondary-side winding are respectively connected to the midpoint of the first bridge arm and the midpoint of the second bridge arm. The capacitor midpoint is a connection point between the first resonant capacitor and the second resonant capacitor.

In this implementation, the first resonant capacitor, the second resonant capacitor, and the inductor form a resonant circuit, so that the power conversion apparatus is a resonant power conversion apparatus, and a current waveform of the inductor tends to be a sine wave. This helps reduce a peak value of a current flowing on a switching transistor in the power conversion apparatus, and helps the switching transistor in the power conversion apparatus implement soft switching, to reduce a loss of the switching transistor, thereby improving efficiency of the power conversion apparatus.

With reference to the fourth possible implementation of the first aspect, in a ninth possible implementation, the power conversion apparatus further includes a fourth bridge arm. The fourth bridge arm is connected in parallel to the third bridge arm. The two ends of the primary-side winding are respectively connected to the midpoint of the first bridge arm and the midpoint of the second bridge arm, and the secondary-side winding and the inductor are connected in series between the midpoint of the third bridge arm and a midpoint of the fourth bridge arm.

In this implementation, in addition to being applicable to a circuit structure with three bridge arms, the power conversion apparatus is further applicable to a circuit structure with four bridge arms, and is highly applicable.

With reference to the fourth possible implementation of the first aspect, in a tenth possible implementation, the power conversion apparatus further includes a fourth bridge arm. The fourth bridge arm is connected in parallel to the third bridge arm. The primary-side winding and the inductor are connected in series between the midpoint of the first bridge arm and the midpoint of the second bridge arm, and the two ends of the secondary-side winding are respectively connected to the midpoint of the third bridge arm and a midpoint of the fourth bridge arm.

In this implementation, in addition to being applicable to a circuit structure with three bridge arms, the power conversion apparatus is further applicable to a circuit structure with four bridge arms, and is highly applicable. In addition, in addition to being connected in series to the secondary-side winding, the inductor may be further connected in series to the primary-side winding. The power conversion apparatus has diversified structures and high flexibility.

With reference to the fourth possible implementation of the first aspect, in an eleventh possible implementation, the power conversion apparatus further includes a fourth bridge arm. The fourth bridge arm is connected in parallel to the third bridge arm. The two ends of the primary-side winding are respectively connected to the midpoint of the third bridge arm and a midpoint of the fourth bridge arm, and the secondary-side winding and the inductor are connected in series between the midpoint of the first bridge arm and the midpoint of the second bridge arm.

In this implementation, in addition to being applicable to a circuit structure with three bridge arms, the power conversion apparatus is further applicable to a circuit structure with four bridge arms, and is highly applicable. In addition, in addition to being connected to the secondary-side winding, the third bridge arm may be further connected to the primary-side winding. The power conversion apparatus has diversified structures and high flexibility.

With reference to the fourth possible implementation of the first aspect, in a twelfth possible implementation, the power conversion apparatus further includes a fourth bridge arm. The fourth bridge arm is connected in parallel to the third bridge arm. The primary-side winding and the inductor are connected in series between the midpoint of the third bridge arm and a midpoint of the fourth bridge arm, and the two ends of the secondary-side winding are respectively connected to the midpoint of the first bridge arm and the midpoint of the second bridge arm.

In this implementation, in addition to being applicable to a circuit structure with three bridge arms, the power conversion apparatus is further applicable to a circuit structure with four bridge arms, and is highly applicable.

With reference to any one of the ninth possible implementation of the first aspect to the twelfth possible implementation of the first aspect, in a thirteenth possible implementation, the power conversion apparatus further includes a first resonant capacitor. The primary-side winding or the secondary-side winding, the inductor, and the first resonant capacitor are connected in series between the midpoint of the first bridge arm and the midpoint of the second bridge arm, or the primary-side winding or the secondary-side winding and the first resonant capacitor are connected in series between the midpoint of the first bridge arm and the midpoint of the second bridge arm, or the primary-side winding or the secondary-side winding, the inductor, and the first resonant capacitor are connected in series between the midpoint of the third bridge arm and the midpoint of the fourth bridge arm, or the primary-side winding or the secondary-side winding and the first resonant capacitor are connected in series between the midpoint of the third bridge arm and the midpoint of the fourth bridge arm.

In this implementation, the first resonant capacitor and the inductor form a resonant circuit, so that the power conversion apparatus is a resonant power conversion apparatus, and a current waveform of the inductor tends to be a sine wave. This helps reduce a peak value of a current flowing on a switching transistor in the power conversion apparatus, and helps the switching transistor in the power conversion apparatus implement soft switching, to reduce a loss of the switching transistor, thereby improving efficiency of the power conversion apparatus. In addition, the first resonant capacitor and the inductor may be connected to a same winding of the transformer, and the first resonant capacitor and the inductor may alternatively be respectively connected to two different windings of the transformer, so that the power conversion apparatus has diversified structures and high flexibility.

With reference to any one of the fourth possible implementation of the first aspect to the thirteenth possible implementation of the first aspect, in a fourteenth possible implementation, the inductor includes leakage inductance of the transformer.

According to a second aspect, this application provides a control method for a power conversion apparatus. The method includes: controlling, when electrical data of a transformer is greater than a threshold and a phase of a fourth switching transistor lags behind a phase of a first switching transistor by a first phase angle, the phase of the first switching transistor to lag behind the phase of the fourth switching transistor by a second phase angle; and controlling, when the electrical data of the transformer is less than or equal to the threshold and the phase of the first switching transistor lags behind the phase of the fourth switching transistor by the second phase angle, the phase of the fourth switching transistor to lag behind the phase of the first switching transistor by the first phase angle. Both the first phase angle and the second phase angle are greater than or equal to 0° and less than or equal to 180°. The electrical data of the transformer includes an input voltage, an input current, an output voltage, or an output current of the transformer. The method is applicable to the power conversion apparatus. The power conversion apparatus is configured to be connected between a direct current power supply and a power grid or a load for energy conversion. The power conversion apparatus includes a first bridge arm, a second bridge arm, and the transformer. The transformer includes a primary-side winding and a secondary-side winding. The first bridge arm includes the first switching transistor and a second switching transistor that are connected in series, and the second bridge arm includes a third switching transistor and the fourth switching transistor that are connected in series. The first bridge arm and the second bridge arm are connected in parallel, and a midpoint of the first bridge arm and a midpoint of the second bridge arm are respectively connected to two ends of the primary-side winding or two ends of the secondary-side winding. The first switching transistor is connected to the third switching transistor.

With reference to the second aspect, in a first possible implementation, the first phase angle is the same as the second phase angle.

With reference to the second aspect or the first possible implementation of the second aspect, in a second possible implementation, the power conversion apparatus further includes a third bridge arm. The midpoint of the first bridge arm and the midpoint of the second bridge arm are respectively connected to the two ends of the primary-side winding, and a midpoint of the third bridge arm is connected to the secondary-side winding. Alternatively, the midpoint of the first bridge arm and the midpoint of the second bridge arm are respectively connected to the two ends of the secondary-side winding, and a midpoint of the third bridge arm is connected to the primary-side winding. The third bridge arm includes a fifth switching transistor and a sixth switching transistor that are connected in series. A controller is configured to: control, when the electrical data of the transformer is greater than the threshold, the phase of the fourth switching transistor lags behind the phase of the first switching transistor by the first phase angle, and a phase of the fifth switching transistor lags behind the phase of the first switching transistor by a third phase angle, the phase of the first switching transistor to lag behind the phase of the fourth switching transistor by the second phase angle and the phase of the fifth switching transistor to lag behind the phase of the fourth switching transistor by a fourth phase angle; and control, when the electrical data of the transformer is less than or equal to the threshold, the phase of the first switching transistor lags behind the phase of the fourth switching transistor by the second phase angle, and the phase of the fifth switching transistor lags behind the phase of the fourth switching transistor by the fourth phase angle, the phase of the fourth switching transistor to lag behind the phase of the first switching transistor by the first phase angle and the phase of the fifth switching transistor to lag behind the phase of the first switching transistor by the third phase angle.

With reference to the second possible implementation of the second aspect, in a third possible implementation, the third phase angle is the same as the fourth phase angle.

With reference to the second possible implementation of the second aspect or the third possible implementation of the second aspect, in a fourth possible implementation, the power conversion apparatus further includes an inductor. The inductor and the primary-side winding or the secondary-side winding are connected in series between the midpoint of the first bridge arm and the midpoint of the second bridge arm, or the inductor and the primary-side winding or the secondary-side winding are connected in series and then connected to the midpoint of the third bridge arm.

With reference to the fourth possible implementation of the second aspect, in a fifth possible implementation, the power conversion apparatus further includes a first resonant capacitor and a second resonant capacitor. The first resonant capacitor and the second resonant capacitor are connected in series and then connected in parallel to the third bridge arm. The two ends of the primary-side winding are respectively connected to the midpoint of the first bridge arm and the midpoint of the second bridge arm, and the secondary-side winding and the inductor are connected in series between the midpoint of the third bridge arm and a capacitor midpoint. The capacitor midpoint is a connection point between the first resonant capacitor and the second resonant capacitor.

With reference to the fourth possible implementation of the second aspect, in a sixth possible implementation, the power conversion apparatus further includes a first resonant capacitor and a second resonant capacitor. The first resonant capacitor and the second resonant capacitor are connected in series and then connected in parallel to the third bridge arm. The primary-side winding and the inductor are connected in series between the midpoint of the first bridge arm and the midpoint of the second bridge arm, and the two ends of the secondary-side winding are respectively connected to the midpoint of the third bridge arm and a capacitor midpoint. The capacitor midpoint is a connection point between the first resonant capacitor and the second resonant capacitor.

With reference to the fourth possible implementation of the second aspect, in a seventh possible implementation, the power conversion apparatus further includes a first resonant capacitor and a second resonant capacitor. The first resonant capacitor and the second resonant capacitor are connected in series and then connected in parallel to the third bridge arm. The two ends of the primary-side winding are respectively connected to the midpoint of the third bridge arm and a capacitor midpoint, and the secondary-side winding and the inductor are connected in series between the midpoint of the first bridge arm and the midpoint of the second bridge arm. The capacitor midpoint is a connection point between the first resonant capacitor and the second resonant capacitor.

With reference to the fourth possible implementation of the second aspect, in an eighth possible implementation, the power conversion apparatus further includes a first resonant capacitor and a second resonant capacitor. The first resonant capacitor and the second resonant capacitor are connected in series and then connected in parallel to the third bridge arm. The primary-side winding and the inductor are connected in series between the midpoint of the third bridge arm and a capacitor midpoint, and the two ends of the secondary-side winding are respectively connected to the midpoint of the first bridge arm and the midpoint of the second bridge arm. The capacitor midpoint is a connection point between the first resonant capacitor and the second resonant capacitor.

With reference to the fourth possible implementation of the second aspect, in a ninth possible implementation, the power conversion apparatus further includes a fourth bridge arm. The fourth bridge arm is connected in parallel to the third bridge arm. The two ends of the primary-side winding are respectively connected to the midpoint of the first bridge arm and the midpoint of the second bridge arm, and the secondary-side winding and the inductor are connected in series between the midpoint of the third bridge arm and a midpoint of the fourth bridge arm.

With reference to the fourth possible implementation of the second aspect, in a tenth possible implementation, the power conversion apparatus further includes a fourth bridge arm. The fourth bridge arm is connected in parallel to the third bridge arm. The primary-side winding and the inductor are connected in series between the midpoint of the first bridge arm and the midpoint of the second bridge arm, and the two ends of the secondary-side winding are respectively connected to the midpoint of the third bridge arm and a midpoint of the fourth bridge arm.

With reference to the fourth possible implementation of the second aspect, in an eleventh possible implementation, the power conversion apparatus further includes a fourth bridge arm. The fourth bridge arm is connected in parallel to the third bridge arm. The two ends of the primary-side winding are respectively connected to the midpoint of the third bridge arm and a midpoint of the fourth bridge arm, and the secondary-side winding and the inductor are connected in series between the midpoint of the first bridge arm and the midpoint of the second bridge arm.

With reference to the fourth possible implementation of the second aspect, in a twelfth possible implementation, the power conversion apparatus further includes a fourth bridge arm. The fourth bridge arm is connected in parallel to the third bridge arm. The primary-side winding and the inductor are connected in series between the midpoint of the third bridge arm and a midpoint of the fourth bridge arm, and the two ends of the secondary-side winding are respectively connected to the midpoint of the first bridge arm and the midpoint of the second bridge arm.

With reference to any one of the ninth possible implementation of the second aspect to the twelfth possible implementation of the second aspect, in a thirteenth possible implementation, the power conversion apparatus further includes a first resonant capacitor. The primary-side winding or the secondary-side winding, the inductor, and the first resonant capacitor are connected in series between the midpoint of the first bridge arm and the midpoint of the second bridge arm, or the primary-side winding or the secondary-side winding and the first resonant capacitor are connected in series between the midpoint of the first bridge arm and the midpoint of the second bridge arm, or the primary-side winding or the secondary-side winding, the inductor, and the first resonant capacitor are connected in series between the midpoint of the third bridge arm and the midpoint of the fourth bridge arm, or the primary-side winding or the secondary-side winding and the first resonant capacitor are connected in series between the midpoint of the third bridge arm and the midpoint of the fourth bridge arm.

With reference to any one of the fourth possible implementation of the second aspect to the thirteenth possible implementation of the second aspect, in a fourteenth possible implementation, the inductor includes leakage inductance of the transformer.

It should be understood that mutual reference may be made to the implementations and beneficial effects of the foregoing aspects of this application.

### BRIEF DESCRIPTION OF DRAWINGS

FIG. 1a is a diagram of a structure of a DAB converter in the conventional technology;
FIG. 1b is a diagram of voltage and current waveforms of a DAB converter in the conventional technology;
FIG. 1c is a diagram of a structure of a DAB converter with a bias in the conventional technology;
FIG. 1d is a diagram of voltage and current waveforms of a DAB converter with bias in the conventional technology;
FIG. 2 is a diagram of an application scenario of a power conversion apparatus according to this application;
FIG. 3a is a diagram of a structure of a power conversion apparatus according to this application;
FIG. 3b is another diagram of a structure of a power conversion apparatus according to this application;
FIG. 3c is another diagram of a structure of a power conversion apparatus according to this application;
FIG. 3d is another diagram of a structure of a power conversion apparatus according to this application;
FIG. 4 is another diagram of a structure of a power conversion apparatus according to this application;
FIG. 5 is a diagram of voltage and current waveforms of a power conversion apparatus according to this application;
FIG. 6a is another diagram of a structure of a power conversion apparatus according to this application;
FIG. 6b is another diagram of a structure of a power conversion apparatus according to this application;
FIG. 6c is another diagram of a structure of a power conversion apparatus according to this application;
FIG. 6d is another diagram of a structure of a power conversion apparatus according to this application;
FIG. 6e is another diagram of a structure of a power conversion apparatus according to this application;
FIG. 7 is another diagram of a structure of a power conversion apparatus according to this application;
FIG. 8 is another diagram of voltage and current waveforms of a power conversion apparatus according to this application;
FIG. 9 is still another diagram of voltage and current waveforms of a power conversion apparatus according to this application;
FIG. 10a is another diagram of a structure of a power conversion apparatus according to this application;
FIG. 10b is another diagram of a structure of a power conversion apparatus according to this application;
FIG. 10c is another diagram of a structure of a power conversion apparatus according to this application;
FIG. 10d is another diagram of a structure of a power conversion apparatus according to this application;
FIG. 10e is another diagram of a structure of a power conversion apparatus according to this application;
FIG. 11a is another diagram of a structure of a power conversion apparatus according to this application;
FIG. 11b is another diagram of a structure of a power conversion apparatus according to this application;
FIG. 12a is another diagram of a structure of a power conversion apparatus according to this application;
FIG. 12b is still another diagram of a structure of a power conversion apparatus according to this application;
FIG. 13 is a schematic flowchart of a control method for a power conversion apparatus according to this application; and
FIG. 14 is another schematic flowchart of a control method for a power conversion apparatus according to this application.

### DESCRIPTION OF EMBODIMENTS

A power conversion apparatus provided in this application is applicable to a plurality of application fields such as the energy storage and power generation field, the photovoltaic power generation field, the new energy smart microgrid field, and the power transmission and distribution field. The power conversion apparatus provided in this application may be an inverter, a power conversion system (Power Conversion System, PCS), an uninterruptible power supply (Uninterruptible Power Supply, UPS), or the like, and is applicable to different application scenarios, for example, a photovoltaic power supply scenario, an energy storage power supply scenario, a photovoltaic storage hybrid power supply scenario, and a UPS power supply scenario. The following uses the photovoltaic power supply scenario as an example for description.

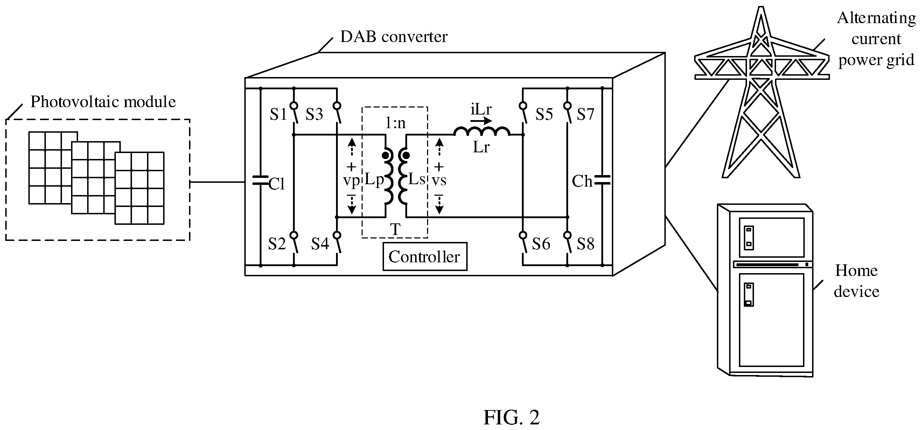

FIG. 2 is a diagram of an application scenario of a power conversion apparatus according to this application. In the photovoltaic power supply scenario, the power conversion apparatus provided in this application is a DAB converter shown in FIG. 2. The DAB converter includes a first bridge arm, a second bridge arm, a third bridge arm, a fourth bridge arm, a transformer T, an inductor Lr, and a controller. The transformer T includes a primary-side winding Lp and a secondary-side winding Ls. An input end of the DAB converter is connected to a photovoltaic module, and an output end is connected to an alternating current power grid or a home device. The first bridge arm includes a switching transistor S1 and a switching transistor S2 that are connected in series, the second bridge arm includes a switching transistor S3 and a switching transistor S4 that are connected in series, the third bridge arm includes a switching transistor S5 and a switching transistor S6 that are connected in series, and the fourth bridge arm includes a switching transistor S7 and a switching transistor S8 that are connected in series. The first bridge arm and the second bridge arm are connected in parallel at the input end of the DAB converter, and a midpoint of the first bridge arm (namely, a connection point between the switching transistors S1 and S2) and a midpoint of the second bridge arm (namely, a connection point between the switching transistors S3 and S4) are respectively connected to two ends of the primary-side winding Lp. The secondary-side winding Ls and the inductor Lr are connected in series between a midpoint of the third bridge arm (namely, a connection point between the switching transistors S5 and S6) and a midpoint of the fourth bridge arm (namely, a connection point between the switching transistors S7 and S8), and the third bridge arm and the fourth bridge arm are connected in parallel at the output end of the DAB converter. Optionally, the first bridge arm includes a switching transistor S5 and a switching transistor S6 that are connected in series, the second bridge arm includes a switching transistor S7 and a switching transistor S8 that are connected in series, the third bridge arm includes a switching transistor S1 and a switching transistor S2 that are connected in series, and the fourth bridge arm includes a switching transistor S3 and a switching transistor S4 that are connected in series.

After the DAB converter starts to run, the controller in the DAB converter adjusts a switching frequency of the bridge arm and a phase angle between the four bridge arms, to invert a direct current at the input end of the DAB converter into an alternating current, so as to supply power to a plurality of types of electric devices such as an alternating current power grid or a load. In a process in which the DAB converter supplies power to the electric device, the controller in the DAB converter controls, when electrical data (for example, an input voltage, an input current, an output voltage, or an output current) of the transformer T is greater than a threshold and a phase of the switching transistor S4 lags behind a phase of the switching transistor S1 by a first phase angle, the phase of the switching transistor S1 to lag behind the phase of the switching transistor S4 by a second phase angle; and controls, when the electrical data of the transformer T is less than or equal to the threshold and the phase of the switching transistor S1 lags behind the phase of the switching transistor S4 by the second phase angle, the phase of the switching transistor S4 to lag behind the phase of the switching transistor S1 by the first phase angle. Both the first phase angle and the second phase angle are greater than or equal to 0° and less than or equal to 180°. Therefore, it is ensured that when a voltage bias occurs in the transformer T, the DAB converter controls the DAB converter to switch between a first working mode (that is, the phase of the switching transistor S4 lags behind the phase of the switching transistor S1 by the first phase angle) and a second working mode (that is, the phase of the switching transistor S1 lags behind the phase of the switching transistor S4 by the second phase angle), to cancel the voltage bias borne by the transformer T.

It may be understood that when a voltage bias occurs in the transformer T, the DAB converter controls the DAB converter to switch between the first working mode and the second working mode, so that when the voltage bias occurs in the transformer T, a lead-lag relationship between the first bridge arm and the second bridge arm is reversed before and after mode switching. Therefore, an amplitude and a shape of a current waveform of the inductor Lr remain unchanged before and after mode switching, but there is a different phase relative to the first bridge arm, so that a voltage bias borne by the transformer T after mode switching is opposite to a voltage bias borne by the transformer T before mode switching, to cancel the voltage bias borne by the transformer T before mode switching, so as to avoid saturation of the transformer T and protect the DAB converter.

The foregoing is merely an example of the application scenario of the power conversion apparatus provided in this application, but is not exhaustive. The application scenario is not limited in this application.

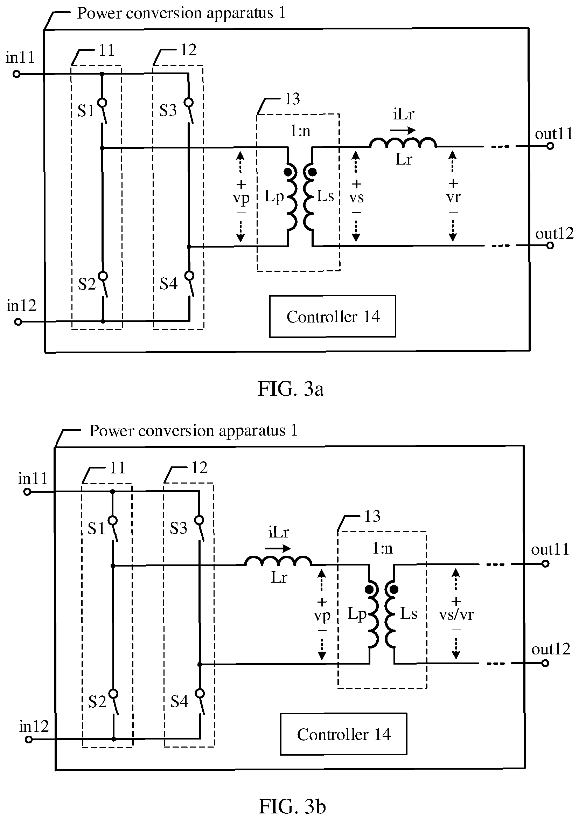

With reference to FIG. 3a to FIG. 12b, the following describes, by using examples, a working principle of the power conversion apparatus provided in this application.

FIG. 3a is a diagram of a structure of a power conversion apparatus according to this application. As shown in FIG. 3a, the power conversion apparatus 1 is configured to be connected between a direct current power supply and a power grid or a load for energy conversion. The power conversion apparatus 1 includes a first bridge arm 11, a second bridge arm 12, a transformer 13, and a controller 14. The transformer 13 includes a primary-side winding Lp and a secondary-side winding Ls. Input ends of the power conversion apparatus 1 include input ends in11 and in12, and the input ends in11 and in12 are configured to be respectively connected to a positive electrode and a negative electrode of the direct current power supply. The direct current power supply includes a photovoltaic module or a battery cluster. Output ends of the power conversion apparatus 1 include output ends out11 and out12, and the output ends out11 and out12 are configured to be connected to an alternating current power grid or a load. The first bridge arm 11 and the second bridge arm 12 are connected in parallel between the input ends in11 and in12. A midpoint of the first bridge arm 11 and a midpoint of the second bridge arm 12 are respectively connected to two ends of the primary-side winding Lp, for example, a dotted terminal and an undotted terminal of the primary-side winding Lp. The first bridge arm 11 includes a switching transistor S1 and a switching transistor S2 that are connected in series, and the midpoint of the first bridge arm 11 is a connection point between the switching transistors S1 and S2. The second bridge arm 12 includes a switching transistor S3 and a switching transistor S4 that are connected in series, and the midpoint of the second bridge arm 12 is a connection point between the switching transistors S3 and S4. The switching transistor in each bridge arm may be a controllable switching transistor, for example, a metal-oxide-semiconductor field-effect transistor (Metal-Oxide-Semiconductor Field-Effect Transistor, MOSFET), a bipolar junction transistor (Bipolar Junction Transistor, BJT), or an insulated gate bipolar transistor (Insulated Gate Bipolar Transistor, IGBT). The power conversion apparatus 1 further includes an inductor Lr. The inductor Lr is connected in series to the secondary-side winding Ls. Optionally, the inductor Lr may alternatively be connected in series to the primary-side winding Lp. For details, refer to a power conversion apparatus 1 shown in FIG. 3b. As shown in FIG. 3b, the inductor Lr and the primary-side winding Lp are connected in series between the midpoint of the first bridge arm 11 and the midpoint of the second bridge arm 12.

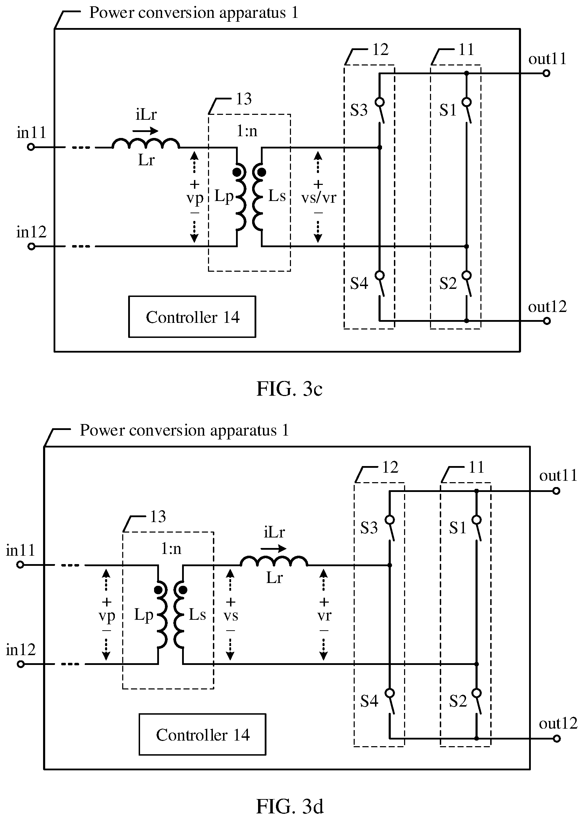

Optionally, the first bridge arm 11 and the second bridge arm 12 may alternatively be connected to the secondary-side winding Ls. For details, refer to a power conversion apparatus 1 shown in FIG. 3c. As shown in FIG. 3c, the first bridge arm 11 and the second bridge arm 12 are connected in parallel between the output ends out11 and out12 of the power conversion apparatus 1. A midpoint of the first bridge arm 11 and a midpoint of the second bridge arm 12 are respectively connected to two ends of the secondary-side winding Ls, for example, an undotted terminal and a dotted terminal of the secondary-side winding Ls. The power conversion apparatus 1 further includes an inductor Lr. The inductor Lr is connected in series to the primary-side winding Lp. Optionally, the inductor Lr may alternatively be connected in series to the secondary-side winding Ls. For details, refer to a power conversion apparatus 1 shown in FIG. 3d. As shown in FIG. 3d, the inductor Lr and the secondary-side winding Ls are connected in series between the midpoint of the first bridge arm 11 and the midpoint of the second bridge arm 12.

It should be noted that in this application, the inductor Lr may be leakage inductance of the transformer 13, or may be an inductor independent of the transformer 13. This is not limited in this application.

In an implementation, after the power conversion apparatus 1 works, the controller 14 controls the power conversion apparatus 1 to be in a first working mode or a second working mode. Then, the controller 14 starts to detect electrical data of the transformer 13, and controls, based on the electrical data of the transformer 13, the power conversion apparatus 1 to switch between the first working mode and the second working mode. The electrical data of the transformer 13 includes an input voltage, an input current, an output voltage, or an output current of the transformer 13. In the first working mode, a phase of the switching transistor S4 lags behind a phase of the switching transistor S1 by a first phase angle, that is, a turn-on moment of the switching transistor S4 lags behind a turn-on moment of the switching transistor S1, and a phase difference between a phase of the switching transistor S4 at a start turn-on moment and a phase of the switching transistor S1 at a start turn-on moment is the first phase angle. Optionally, the first phase angle may alternatively be a phase angle by which a phase of the switching transistor S3 lags behind a phase of the switching transistor S2, that is, a turn-on moment of the switching transistor S3 lags behind a turn-on moment of the switching transistor S2, and a phase difference between a phase of the switching transistor S3 at a start turn-on moment and a phase of the switching transistor S2 at a start turn-on moment is the first phase angle. In the second working mode, the phase of the switching transistor S1 lags behind the phase of the switching transistor S4 by a second phase angle, that is, the turn-on moment of the switching transistor S1 lags behind the turn-on moment of the switching transistor S4, and a phase difference between the phase of the switching transistor S1 at the start turn-on moment and the phase of the switching transistor S4 at the start turn-on moment is the second phase angle. Optionally, the second phase angle may alternatively be a phase angle by which the phase of the switching transistor S2 lags behind the phase of the switching transistor S3, that is, the turn-on moment of the switching transistor S2 lags behind the turn-on moment of the switching transistor S3, and a phase difference between the phase of the switching transistor S2 at the start turn-on moment and the phase of the switching transistor S3 at the start turn-on moment is the second phase angle. Both the first phase angle and the second phase angle are greater than or equal to 0° and less than or equal to 180°.

Specifically, the controller 14 controls, when the power conversion apparatus 1 is in the first working mode and the electrical data of the transformer 13 is greater than a threshold, the power conversion apparatus 1 to switch to the second working mode. The controller 14 further controls, when the power conversion apparatus 1 is in the second working mode and the electrical data of the transformer 13 is less than or equal to the threshold, the power conversion apparatus 1 to switch to the first working mode. Therefore, it is ensured that when a voltage bias occurs in the transformer 13, the controller 14 controls the power conversion apparatus 1 to switch between the first working mode and the second working mode, to cancel the voltage bias borne by the transformer 13.

In this embodiment of this application, when a voltage bias occurs in the transformer 13, the power conversion apparatus 1 controls the power conversion apparatus 1 to switch between the first working mode and the second working mode, so that when the voltage bias occurs in the transformer 13, a lead-lag relationship between the first bridge arm 11 and the second bridge arm 12 is reversed before and after mode switching. Therefore, an amplitude and a shape of a current waveform of the inductor Lr remain unchanged before and after mode switching, but there is a different phase relative to the first bridge arm 11, so that a voltage bias borne by the transformer 13 after mode switching is opposite to a voltage bias borne by the transformer 13 before mode switching, to cancel the voltage bias borne by the transformer 13 before mode switching, so as to avoid saturation of the transformer 13 and protect the power conversion apparatus 1.

Regardless of whether the inductor Lr in the power conversion apparatus 1 is connected in series to the primary-side winding Lp or the secondary-side winding Ls, there is a consistent manner of eliminating, by the power conversion apparatus 1, the voltage bias borne by the transformer 13. Therefore, for ease of description, the following describes a working principle of the power conversion apparatus 1 by using an example in which the inductor Lr is connected in series to the secondary-side winding Ls.

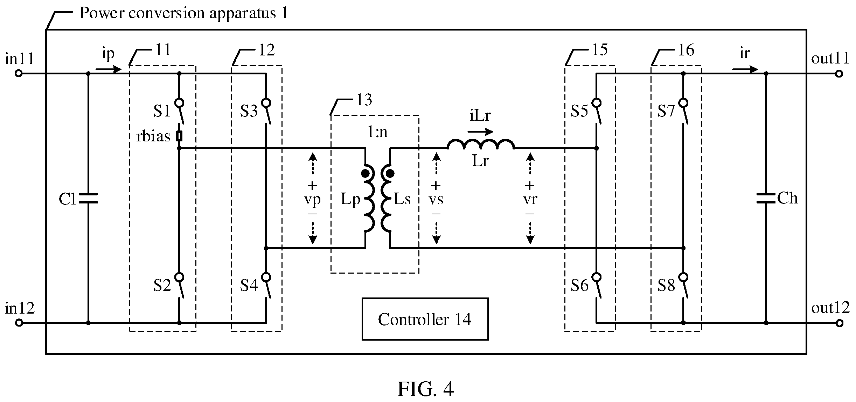

For example, FIG. 4 is another diagram of a structure of a power conversion apparatus according to this application. As shown in FIG. 4, compared with the power conversion apparatus 1 shown in FIG. 3a, the power conversion apparatus 1 shown in FIG. 4 further includes a third bridge arm 15 and a fourth bridge arm 16. The third bridge arm 15 and the fourth bridge arm 16 are connected in parallel between the output ends out11 and out12 of the power conversion apparatus 1, and the secondary-side winding Ls and the inductor Lr are connected in series between a midpoint of the third bridge arm 15 and a midpoint of the fourth bridge arm 16. The third bridge arm 15 includes a switching transistor S5 and a switching transistor S6 that are connected in series, and the midpoint of the third bridge arm 15 is a connection point between the switching transistors S5 and S6. The fourth bridge arm 16 includes a switching transistor S7 and a switching transistor S8 that are connected in series, and the midpoint of the fourth bridge arm 16 is a connection point between the switching transistors S7 and S8. Optionally, the power conversion apparatus 1 further includes an input capacitor Cl and an output capacitor Ch. The input capacitor Cl is connected between the input ends in11 and in12 of the power conversion apparatus 1, and the output capacitor Ch is connected between the output ends out11 and out12 of the power conversion apparatus 1.

In an implementation, after the power conversion apparatus 1 works, the controller 14 adjusts a switching frequency of the switching transistor in each bridge arm, a phase angle between the first bridge arm 11 and the second bridge arm 12, a phase angle between the third bridge arm 15 and the fourth bridge arm 16, and a phase angle between the first bridge arm 11 and the third bridge arm 15, so that the power conversion apparatus 1 is in a first working mode or a second working mode, to control output power of the power conversion apparatus 1. The phase angle between the first bridge arm 11 and the second bridge arm 12 is a phase difference between two switching transistors at diagonal positions in the first bridge arm 11 and the second bridge arm 12, for example, a phase difference between a phase of the switching transistor S1 at a start turn-on moment and a phase of the switching transistor S4 at a start turn-on moment. The phase angle between the third bridge arm 15 and the fourth bridge arm 16 is a phase difference between two switching transistors at diagonal positions in the third bridge arm 15 and the fourth bridge arm 16, for example, a phase difference between a phase of the switching transistor S5 at a start turn-on moment and a phase of the switching transistor S8 at a start turn-on moment. The phase angle between the first bridge arm 11 and the third bridge arm 15 is a phase difference between a phase of any switching transistor in the first bridge arm 11 and a phase of any switching transistor in the third bridge arm 15, for example, a phase difference between the phase of the switching transistor S1 at the start turn-on moment and the phase of the switching transistor S5 at the start turn-on moment, a phase difference between a phase of the switching transistor S2 at a start turn-on moment and a phase of the switching transistor S6 at a start turn-on moment, a phase difference between the phase of the switching transistor S1 at the start turn-on moment and a phase of the switching transistor S6 at a start turn-on moment, or a phase difference between a phase of the switching transistor S2 at a start turn-on moment and the phase of the switching transistor S5 at the start turn-on moment.

In the first working mode, a phase of the switching transistor S4 lags behind a phase of the switching transistor S1 by a first phase angle, and a phase of the switching transistor S5 lags behind the phase of the switching transistor S1 by a third phase angle. In the second working mode, the phase of the switching transistor S1 lags behind the phase of the switching transistor S4 by a second phase angle, and the phase of the switching transistor S5 lags behind the phase of the switching transistor S4 by a fourth phase angle. The phase of the switching transistor S5 lags behind the phase of the switching transistor S1 by the third phase angle, that is, a turn-on moment of the switching transistor S5 lags behind a turn-on moment of the switching transistor S1, and a phase difference between the phase of the switching transistor S5 at the start turn-on moment and the phase of the switching transistor S1 at the start turn-on moment is the third phase angle. Optionally, the third phase angle may alternatively be a phase angle by which a phase of the switching transistor S6 lags behind a phase of the switching transistor S2, a phase angle by which a phase of the switching transistor S6 lags behind the phase of the switching transistor S1, or a phase angle by which the phase of the switching transistor S5 lags behind a phase of the switching transistor S2. The phase of the switching transistor S5 lags behind the phase of the switching transistor S4 by the fourth phase angle, that is, the turn-on moment of the switching transistor S5 lags behind a turn-on moment of the switching transistor S4, and a phase difference between the phase of the switching transistor S5 at the start turn-on moment and the phase of the switching transistor S4 at the start turn-on moment is the fourth phase angle. Optionally, the fourth phase angle may alternatively be a phase angle by which the phase of the switching transistor S5 lags behind a phase of the switching transistor S3, a phase angle by which the phase of the switching transistor S6 lags behind a phase of the switching transistor S3, or a phase angle by which the phase of the switching transistor S6 lags behind the phase of the switching transistor S4. In addition, both the third phase angle and the fourth phase angle range from 0° to 360°.

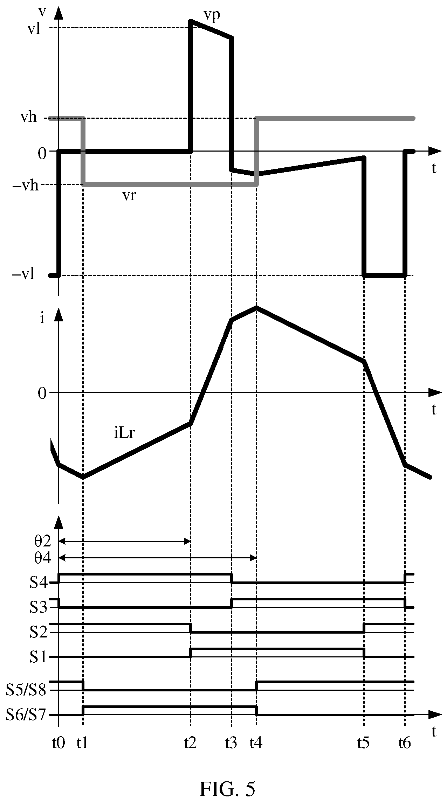

For better understanding, with reference to diagrams of voltage and current waveforms shown in FIG. 1d and FIG. 5, the following describes, by using an example in which on-resistance of the switching transistor S1 is increased by bias resistance rbias and the phase angle between the third bridge arm 15 and the fourth bridge arm 16 is 0, a specific implementation of eliminating, by the power conversion apparatus 1, the voltage bias borne by the transformer 13.

In an embodiment, as shown in FIG. 1d, in a switching period of the power conversion apparatus 1, the controller 14 controls the start turn-on moment of the switching transistor S4 to lag behind the start turn-on moment of the switching transistor S1, and controls the phase difference between the phase of the switching transistor S4 at the start turn-on moment and the phase of the switching transistor S1 at the start moment to be θ1, so that the phase of the switching transistor S4 lags behind the phase of the switching transistor S1 by the first phase angle θ1. In addition, the controller 14 further controls the start turn-on moment of the switching transistor S5 to lag behind the start turn-on moment of the switching transistor S1, and controls the phase difference between the phase of the switching transistor S5 at the start turn-on moment and the phase of the switching transistor S1 at the start turn-on moment to be the third phase angle θ3, so that the phase of the switching transistor S5 lags behind the phase of the switching transistor S1 by the third phase angle θ3. In addition, the controller 14 further controls the switching transistors S5 and S8 to be simultaneously turned on or off, so that the phase angle between the third bridge arm 15 and the fourth bridge arm 16 is 0. Therefore, the power conversion apparatus 1 is in the first working mode.

Specifically, the power conversion apparatus 1 is in a switching period (namely, a time interval from t0 to t6 shown in FIG. 1d) in the first working mode. At a moment t0, the controller 14 controls all of the switching transistors S1, S3, S5, and S8 to be in an on state, and controls all of the switching transistors S2, S4, S6, and S7 to be in an off state. In a time interval from t0 to t1, switching states of the switching transistors in the four bridge arms remain the same as switching states at the moment t0. If the on-resistance of the switching transistor S1 is not increased by the bias resistance rbias, both a primary-side voltage vp (namely, a voltage at the two ends of the primary-side winding Lp) and a secondary-side voltage vs (namely, a voltage at the two ends of the secondary-side winding Ls) of the transformer 13 are 0, and a voltage vr between the midpoint of the third bridge arm 15 and the midpoint of the fourth bridge arm 16 is vh. Therefore, it may be learned that a voltage borne by the inductor Lr is vs-vr=-vh, to learn that a current iLr of the inductor Lr continuously decreases. However, after the on-resistance of the switching transistor S1 is increased by the bias resistance rbias, because the switching transistor S1 is in the on state in the time interval from t0 to t1, and the current iLr of the inductor Lr is a negative value, the primary-side voltage vp of the transformer 13 has a positive bias shown in FIG. 1d in the time interval from t0 to t1.

At a moment t1, the controller 14 controls the switching transistors S1 and S3 to be still in the on state, controls the switching transistors S2 and S4 to be still in the off state, controls both the switching transistors S5 and S8 to switch to the off state, and controls both the switching transistors S6 and S7 to switch to the on state. In a time interval from t1 to t2, the switching states of the switching transistors in the four bridge arms remain the same as switching states at the moment t1. If the on-resistance of the switching transistor S1 is not increased by the bias resistance rbias, both the primary-side voltage vp and the secondary-side voltage vs of the transformer 13 are 0, and the voltage vr between the midpoint of the third bridge arm 15 and the midpoint of the fourth bridge arm 16 is -vh. Therefore, it may be learned that the voltage borne by the inductor Lr is vs-vr=vh, to learn that the current iLr of the inductor Lr starts to continuously increase. However, after the on-resistance of the switching transistor S1 is increased by the bias resistance rbias, because the switching transistor S1 is in the on state in the time interval from t1 to t2, and the current iLr of the inductor Lr is a negative value, the primary-side voltage vp of the transformer 13 has the positive bias shown in FIG. 1d in the time interval from t1 to t2.

At a moment t2, the controller 14 controls the switching transistors S1, S6, and S7 to be still in the on state, controls the switching transistors S2, S5, and S8 to be still in the off state, controls the switching transistor S3 to switch to the off state, and controls the switching transistor S4 to switch to the on state. In a time interval from t2 to t3, the switching states of the switching transistors in the four bridge arms remain the same as switching states at the moment t2. If the on-resistance of the switching transistor S1 is not increased by the bias resistance rbias, the primary-side voltage vp of the transformer 13 is vl, the secondary-side voltage vs of the transformer 13 is n*vl, and the voltage vr between the midpoint of the third bridge arm 15 and the midpoint of the fourth bridge arm 16 is -vh. Therefore, it may be learned that the voltage borne by the inductor Lr is vs-vr=n*vl+vh, to learn that the current iLr of the inductor Lr continuously increases, and increases from a negative value to a positive value. However, after the on-resistance of the switching transistor S1 is increased by the bias resistance rbias, because the switching transistor S1 is still in the on state in the time interval from t2 to t3, the primary-side voltage vp of the transformer 13 also has the bias shown in FIG. 1d in the time interval from t2 to t3.

At a moment t3, the controller 14 controls the switching transistor S1 to switch to the off state, controls the switching transistor S2 to switch to the on state, controls the switching transistors S3, S5, and S8 to be still in the off state, and controls the switching transistors S4, S6, and S7 to be still in the on state. In a time interval from t3 to t4, the switching states of the switching transistors in the four bridge arms remain the same as switching states at the moment t3, both the primary-side voltage vp and the secondary-side voltage vs of the transformer 13 are 0, and the voltage vr between the midpoint of the third bridge arm 15 and the midpoint of the fourth bridge arm 16 is -vh. Therefore, it may be learned that the voltage borne by the inductor Lr is vs-vr=vh, to learn that the current iLr of the inductor Lr continuously increases. Because the switching transistor S1 is in the off state in this time interval, the primary-side voltage vp of the transformer 13 has no bias in the time interval from t3 to t4.

At a moment t4, the controller 14 controls the switching transistors S1 and S3 to be still in the off state, controls the switching transistors S2 and S4 to be still in the on state, controls both the switching transistors S5 and S8 to switch to the on state, and controls both the switching transistors S6 and S7 to switch to the off state. In a time interval from t4 to t5, the switching states of the switching transistors in the four bridge arms remain the same as switching states at the moment t4, both the primary-side voltage vp and the secondary-side voltage vs of the transformer 13 are 0, and the voltage vr between the midpoint of the third bridge arm 15 and the midpoint of the fourth bridge arm 16 is vh. Therefore, it may be learned that the voltage borne by the inductor Lr is vs-vr=-vh, to learn that the current iLr of the inductor Lr starts to continuously decrease. Because the switching transistor S1 is in the off state in this time interval, the primary-side voltage vp of the transformer 13 has no bias in the time interval from t4 to t5.

At a moment t5, the controller 14 controls the switching transistors S1, S6, and S7 to be still in the off state, controls the switching transistors S2, S5, and S8 to be still in the on state, controls the switching transistor S3 to switch to the on state, and controls the switching transistor S4 to switch to the off state. In a time interval from t5 to t6, the switching states of the switching transistors in the four bridge arms remain the same as switching states at the moment t5, the primary-side voltage vp of the transformer 13 is -vl, the secondary-side voltage vs of the transformer 13 is -n*vl, and the voltage vr between the midpoint of the third bridge arm 15 and the midpoint of the fourth bridge arm 16 is vh. Therefore, it may be learned that the voltage borne by the inductor Lr is vs-vr=-n*vl-vh, to learn that the current iLr of the inductor Lr continuously decreases, and decreases from a positive value to a negative value. Because the switching transistor S1 is in the off state in this time interval, the primary-side voltage vp of the transformer 13 has no bias in the time interval from t5 to t6.

After the power conversion apparatus 1 controls, based on a control time sequence of the switching transistors in FIG. 1d, the power conversion apparatus 1 to be in the first working mode, the controller 14 detects electrical data of the transformer 13. When the electrical data of the transformer 13 is greater than a threshold, it indicates that the primary-side voltage vp of the transformer 13 has a positive bias, and the controller 14 controls the power conversion apparatus 1 to switch from the first working mode to the second working mode. The electrical data of the transformer 13 includes an input voltage, an input current, an output voltage, or an output current. When the electrical data of the transformer 13 is the input voltage, the threshold is a first threshold. When the electrical data of the transformer 13 is the input current, the threshold is a second threshold. When the electrical data of the transformer 13 includes the input voltage and the input current, the threshold includes a first threshold and a second threshold. When the electrical data of the transformer 13 is the output voltage, the threshold is a third threshold. When the electrical data of the transformer 13 is the output current, the threshold is a fourth threshold. When the electrical data of the transformer 13 includes the output voltage and the output current, the threshold includes a third threshold and a fourth threshold. Values of the four thresholds are not limited in this application. Specifically, when the input voltage of the transformer 13 is greater than the first threshold and/or the input current of the transformer 13 is greater than the second threshold, the controller 14 controls the power conversion apparatus 1 to switch from the first working mode to the second working mode. Optionally, when the output voltage of the transformer 13 is greater than the third threshold and/or the output current of the transformer 13 is greater than the fourth threshold, the controller 14 controls the power conversion apparatus 1 to switch from the first working mode to the second working mode. Specific values of the four thresholds may be adaptively adjusted based on an actual working condition requirement. For example, all of the four thresholds are 0. In addition, in this application, a voltage (for example, an input voltage or an output voltage) or a current (for example, an input current or an output current) of the transformer used to determine whether a bias occurs in the transformer 13 may be an instantaneous value, a valid value, an absolute value, or the like. This is not limited in this application.

A specific control manner in which the controller 14 controls the power conversion apparatus 1 to switch to the second working mode is as follows:
As shown in FIG. 5, in a switching period of the power conversion apparatus 1, the controller 14 controls the start turn-on moment of the switching transistor S1 to lag behind the start turn-on moment of the switching transistor S4, and controls the phase difference between the phase of the switching transistor S1 at the start turn-on moment and the phase of the switching transistor S4 at the start moment to be θ2, so that the phase of the switching transistor S1 lags behind the phase of the switching transistor S4 by the second phase angle θ2. In addition, the controller 14 further controls the start turn-on moment of the switching transistor S5 to lag behind the start turn-on moment of the switching transistor S4, and controls the phase difference between the phase of the switching transistor S4 at the start turn-on moment and the phase of the switching transistor S5 at the start turn-on moment to be the fourth phase angle θ4, so that the phase of the switching transistor S5 lags behind the phase of the switching transistor S4 by the fourth phase angle θ4. In addition, the controller 14 further controls the switching transistors S5 and S8 to be simultaneously turned on or off, so that the phase angle between the third bridge arm 15 and the fourth bridge arm 16 is 0. Therefore, the power conversion apparatus 1 is in the second working mode.

Specifically, the power conversion apparatus 1 is in a switching period (namely, a time interval from t0 to t6 shown in FIG. 5) in the second working mode. At a moment t0, the controller 14 controls all of the switching transistors S2, S4, S5, and S8 to be in the on state, and controls all of the switching transistors S1, S3, S6, and S7 to be in the off state. In a time interval from t0 to t1, the switching states of the switching transistors in the four bridge arms remain the same as switching states at the moment t0, both the primary-side voltage vp and the secondary-side voltage vs of the transformer 13 are 0, and the voltage vr between the midpoint of the third bridge arm 15 and the midpoint of the fourth bridge arm 16 is vh. Therefore, it may be learned that the voltage borne by the inductor Lr is vs-vr=-vh, to learn that the current iLr of the inductor Lr continuously decreases. Because the switching transistor S1 is in the off state in this time interval, the primary-side voltage vp of the transformer 13 has no bias in the time interval from t0 to t1.

At a moment t1, the controller 14 controls the switching transistors S2 and S4 to be still in the on state, controls the switching transistors S1 and S3 to be still in the off state, controls both the switching transistors S5 and S8 to switch to the off state, and controls both the switching transistors S6 and S7 to switch to the on state. In a time interval from t1 to t2, the switching states of the switching transistors in the four bridge arms remain the same as switching states at the moment t1, both the primary-side voltage vp and the secondary-side voltage vs of the transformer 13 are 0, and the voltage vr between the midpoint of the third bridge arm 15 and the midpoint of the fourth bridge arm 16 is -vh. Therefore, it may be learned that the voltage borne by the inductor Lr is vs-vr=vh, to learn that the current iLr of the inductor Lr starts to continuously increase. Because the switching transistor S1 is in the off state in this time interval, the primary-side voltage vp of the transformer 13 has no bias in the time interval from t1 to t2.

At a moment t2, the controller 14 controls the switching transistors S4, S6, and S7 to be still in the on state, controls the switching transistors S3, S5, and S8 to be still in the off state, controls the switching transistor S2 to switch to the off state, and controls the switching transistor S1 to switch to the on state. In a time interval from t2 to t3, the switching states of the switching transistors in the four bridge arms remain the same as switching states at the moment t2. If the on-resistance of the switching transistor S1 is not increased by the bias resistance rbias, the primary-side voltage vp of the transformer 13 is vl, the secondary-side voltage vs of the transformer 13 is n*vl, and the voltage vr between the midpoint of the third bridge arm 15 and the midpoint of the fourth bridge arm 16 is -vh. Therefore, it may be learned that the voltage borne by the inductor Lr is vs-vr=n*vl+vh, to learn that the current iLr of the inductor Lr continuously increases, and increases from a negative value to a positive value. However, after the on-resistance of the switching transistor S1 is increased by the bias resistance rbias, because the switching transistor S1 is in the on state in the time interval from t2 to t3, the primary-side voltage vp of the transformer 13 has a bias shown in FIG. 5 in the time interval from t2 to t3.

At a moment t3, the controller 14 controls the switching transistor S4 to switch to the off state, controls the switching transistor S3 to switch to the on state, controls the switching transistors S2, S5, and S8 to be still in the off state, and controls the switching transistors S1, S6, and S7 to be still in the on state. In a time interval from t3 to t4, the switching states of the switching transistors in the four bridge arms remain the same as switching states at the moment t3. If the on-resistance of the switching transistor S1 is not increased by the bias resistance rbias, both the primary-side voltage vp and the secondary-side voltage vs of the transformer 13 are 0, and the voltage vr between the midpoint of the third bridge arm 15 and the midpoint of the fourth bridge arm 16 is -vh. Therefore, it may be learned that the voltage borne by the inductor Lr is vs-vr=vh, to learn that the current iLr of the inductor Lr continuously increases. However, after the on-resistance of the switching transistor S1 is increased by the bias resistance rbias, because the switching transistor S1 is in the on state in the time interval from t3 to t4, and the current iLr of the inductor Lr is a positive value, the primary-side voltage vp of the transformer 13 has a negative bias shown in FIG. 1d in the time interval from t3 to t4.

At a moment t4, the controller 14 controls the switching transistors S2 and S4 to be still in the off state, controls the switching transistors S1 and S3 to be still in the on state, controls both the switching transistors S5 and S8 to switch to the on state, and controls both the switching transistors S6 and S7 to switch to the off state. In a time interval from t4 to t5, the switching states of the switching transistors in the four bridge arms remain the same as switching states at the moment t4. If the on-resistance of the switching transistor S1 is not increased by the bias resistance rbias, both the primary-side voltage vp and the secondary-side voltage vs of the transformer 13 are 0, and the voltage vr between the midpoint of the third bridge arm 15 and the midpoint of the fourth bridge arm 16 is vh. Therefore, it may be learned that the voltage borne by the inductor Lr is vs-vr=-vh, to learn that the current iLr of the inductor Lr starts to continuously decrease. However, after the on-resistance of the switching transistor S1 is increased by the bias resistance rbias, because the switching transistor S1 is in the on state in the time interval from t4 to t5, and the current iLr of the inductor Lr is a positive value, the primary-side voltage vp of the transformer 13 also has the negative bias shown in FIG. 5 in the time interval from t4 to t5.

At a moment t5, the controller 14 controls the switching transistors S4, S6, and S7 to be still in the off state, controls the switching transistors S3, S5, and S8 to be still in the on state, controls the switching transistor S2 to switch to the on state, and controls the switching transistor S1 to switch to the off state. In a time interval from t5 to t6, the switching states of the switching transistors in the four bridge arms remain the same as switching states at the moment t5, the primary-side voltage vp of the transformer 13 is -vl, the secondary-side voltage vs of the transformer 13 is -n*vl, and the voltage vr between the midpoint of the third bridge arm 15 and the midpoint of the fourth bridge arm 16 is vh. Therefore, it may be learned that the voltage borne by the inductor Lr is vs-vr=-n*vl-vh, to learn that the current iLr of the inductor Lr continuously decreases, and decreases from a positive value to a negative value. Because the switching transistor S1 is in the off state in this time interval, the primary-side voltage vp of the transformer 13 has no bias in the time interval from t5 to t6.

It may be understood that when the power conversion apparatus 1 is in the first working mode and the primary-side voltage vp of the transformer 13 has a positive bias, the power conversion apparatus 1 controls the power conversion apparatus 1 to switch to the second working mode, so that when the power conversion apparatus 1 is in the second working mode, the primary-side voltage vp of the transformer 13 has a negative bias, to cancel the positive bias borne by the primary-side voltage vp of the transformer 13, so as to avoid saturation of the transformer 13, avoid a case in which the transformer 13 fails to work and consequently the power conversion apparatus 1 is damaged, and protect the power conversion apparatus 1.

After the power conversion apparatus 1 controls, based on a control time sequence of the switching transistors in FIG. 5, the power conversion apparatus 1 to be in the second working mode, the controller 14 detects the electrical data of the transformer 13. When the electrical data of the transformer 13 is less than or equal to the threshold, it indicates that the primary-side voltage vp of the transformer 13 has a negative bias, and the controller 14 controls the power conversion apparatus 1 to switch from the second working mode to the first working mode. The electrical data of the transformer 13 includes an input voltage, an input current, an output voltage, or an output current. Herein, for specific descriptions of the threshold, refer to the descriptions of the corresponding part in the foregoing embodiment of switching the power conversion apparatus 1 from the first working mode to the second working mode. Details are not described herein. Specifically, when the input voltage of the transformer 13 is less than or equal to the first threshold and/or the input current of the transformer 13 is less than or equal to the second threshold, the controller 14 controls the power conversion apparatus 1 to switch from the second working mode to the first working mode. Optionally, when the output voltage of the transformer 13 is less than or equal to the third threshold and/or the output current of the transformer 13 is less than or equal to the fourth threshold, the controller 14 controls the power conversion apparatus 1 to switch from the second working mode to the first working mode.

It may be understood that when the power conversion apparatus 1 is in the second working mode and the primary-side voltage vp of the transformer 13 has a negative bias, the power conversion apparatus 1 controls the power conversion apparatus 1 to switch to the first working mode, so that when the power conversion apparatus 1 is in the first working mode, the primary-side voltage vp of the transformer 13 has a positive bias, to cancel the negative bias borne by the primary-side voltage vp of the transformer 13, so as to avoid saturation of the transformer 13, avoid a case in which the transformer 13 fails to work and consequently the power conversion apparatus 1 is damaged, and protect the power conversion apparatus 1.

It should be noted that the second phase angle θ2 shown in FIG. 5 is the same as the first phase angle θ1 shown in FIG. 1d, and the fourth phase angle θ4 shown in FIG. 5 is the same as the third phase angle θ3 shown in FIG. 1d. Because the second phase angle θ2 is the same as the first phase angle θ1, and the fourth phase angle θ4 is the same as the third phase angle θ3, it indicates that there is always a same phase angle between the first bridge arm 11 and the second bridge arm 12 and always a same phase angle between the third bridge arm 15 and a main bridge arm before and after working mode switching. Therefore, it can be ensured that a voltage waveform of the power conversion apparatus 1 (for example, a voltage waveform of vp or vr) does not change before and after working mode switching of the power conversion apparatus 1, and a current waveform of the inductor Lr does not change before and after working mode switching of the power conversion apparatus 1, thereby not affecting normal working of the power conversion apparatus 1. The main bridge arm is a main bridge arm in the first bridge arm 11 and the second bridge arm 12, is the first bridge arm 11 when the power conversion apparatus 1 is in the first working mode, and is the second bridge arm 12 when the power conversion apparatus 1 is in the second working mode.

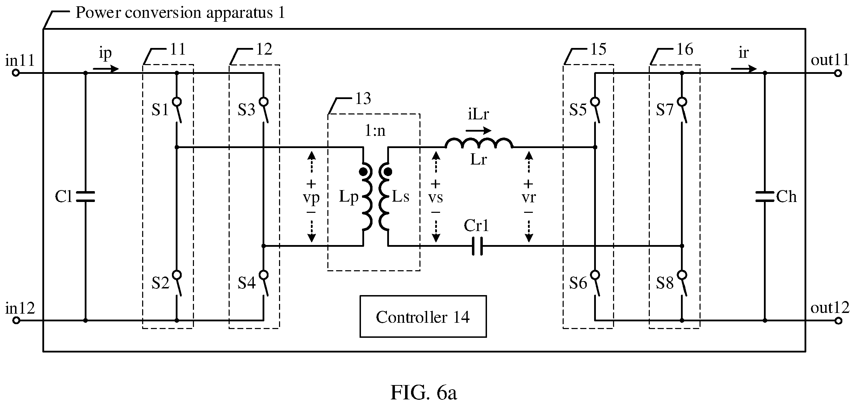

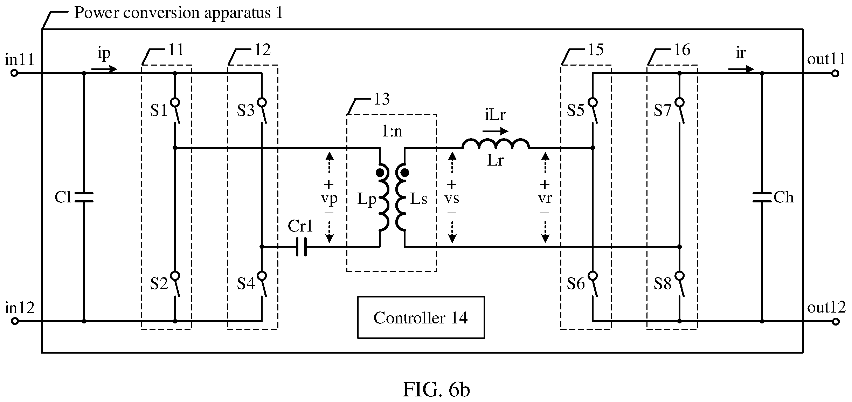

Optionally, the power conversion apparatus 1 shown in FIG. 4 may further include a first resonant capacitor. For details, refer to a power conversion apparatus 1 shown in FIG. 6a. As shown in FIG. 6a, the power conversion apparatus 1 further includes a first resonant capacitor Cr1. The first resonant capacitor Cr1, the inductor Lr, and the secondary-side winding Ls are connected in series between the midpoint of the third bridge arm 15 and the midpoint of the fourth bridge arm 16. The first resonant capacitor Cr1 and the inductor Lr form a resonant circuit, so that the power conversion apparatus 1 is a resonant power conversion apparatus, and a current waveform of the inductor Lr in the power conversion apparatus 1 shown in FIG. 6a tends to be a sine wave. This helps reduce a peak value of a current flowing on a switching transistor in the power conversion apparatus 1, and helps the switching transistor in the power conversion apparatus 1 implement soft switching, to reduce a loss of the switching transistor, thereby improving efficiency of the power conversion apparatus 1. In addition, for a part other than the current waveform of the inductor Lr in a diagram of a voltage and a current of the power conversion apparatus 1 shown in FIG. 6a, refer to the descriptions of the corresponding part in the diagram of the voltage and the current of the power conversion apparatus 1 shown in FIG. 4. Details are not described herein. Optionally, the first resonant capacitor Cr1 in the power conversion apparatus 1 shown in FIG. 6a and the inductor Lr may alternatively be respectively connected to two different windings of the transformer 13. For details, refer to a power conversion apparatus 1 shown in FIG. 6b. As shown in FIG. 6b, the first resonant capacitor Cr1 and the primary-side winding Lp are connected in series between the midpoint of the first bridge arm 11 and the midpoint of the second bridge arm 12, and the inductor Lr and the secondary-side winding Ls are connected in series between the midpoint of the third bridge arm 15 and the midpoint of the fourth bridge arm 16.

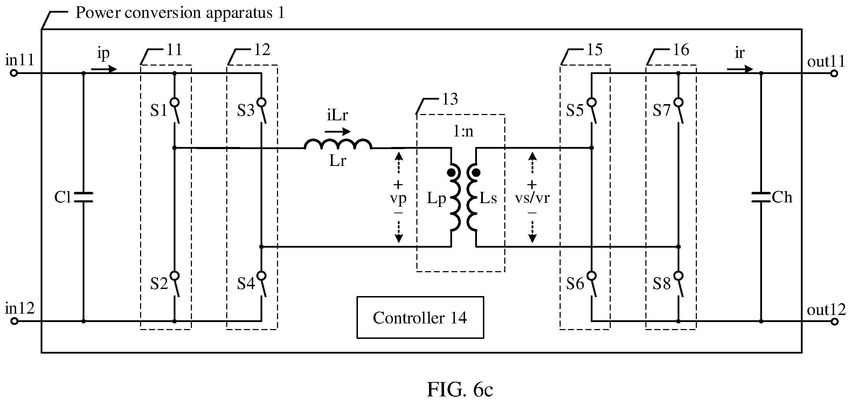

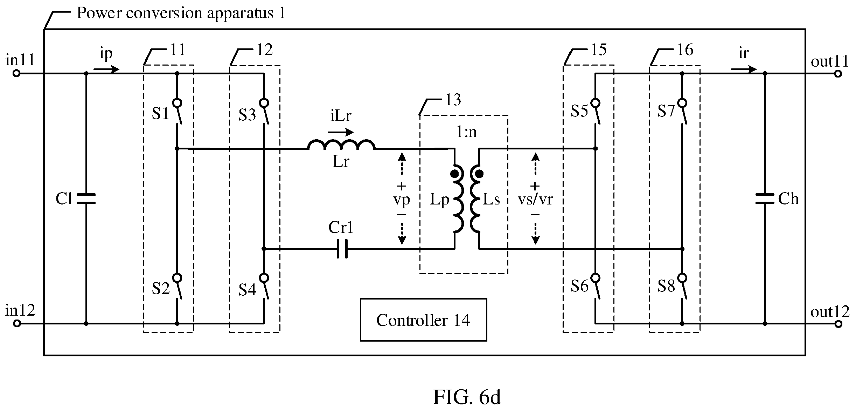

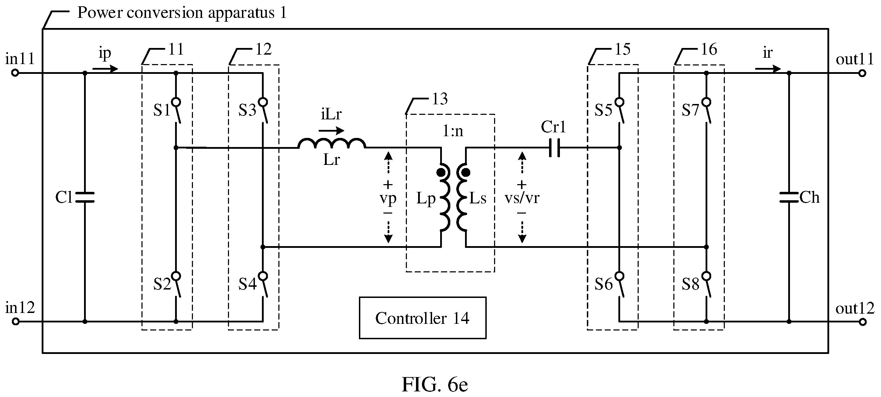

Optionally, the inductor Lr in the power conversion apparatus 1 shown in FIG. 4 may alternatively be connected in series to the primary-side winding Ls. For details, refer to power conversion apparatuses 1 shown in FIG. 6c to FIG. 6e. As shown in FIG. 6c, the inductor Lr and the primary-side winding Lp are connected in series between the midpoint of the first bridge arm 11 and the midpoint of the second bridge arm 12, and the two ends of the secondary-side winding Ls are respectively connected to the midpoint of the third bridge arm 15 and the midpoint of the fourth bridge arm 16. Optionally, the power conversion apparatus 1 shown in FIG. 6c may further include a first resonant capacitor. For details, refer to a power conversion apparatus 1 shown in FIG. 6d. As shown in FIG. 6d, the power conversion apparatus 1 further includes a first resonant capacitor Cr1. The first resonant capacitor Cr1, the inductor Lr, and the primary-side winding Ls are connected in series between the midpoint of the first bridge arm 11 and the midpoint of the second bridge arm 12. The first resonant capacitor Cr1 and the inductor Lr form a resonant circuit, so that the power conversion apparatus 1 is a resonant power conversion apparatus, and a current waveform of the inductor Lr in the power conversion apparatus 1 shown in FIG. 6d tends to be a sine wave. This helps reduce a peak value of a current flowing on a switching transistor in the power conversion apparatus 1, and helps the switching transistor in the power conversion apparatus 1 implement soft switching, to reduce a loss of the switching transistor, thereby improving efficiency of the power conversion apparatus 1. Optionally, the first resonant capacitor Cr1 in the power conversion apparatus 1 shown in FIG. 6d and the inductor Lr may alternatively be respectively connected to two different windings of the transformer 13. For details, refer to a power conversion apparatus 1 shown in FIG. 6e. As shown in FIG. 6e, the inductor Lr and the primary-side winding Lp are connected in series between the midpoint of the first bridge arm 11 and the midpoint of the second bridge arm 12, and the first resonant capacitor Cr1 and the secondary-side winding Ls are connected in series between the midpoint of the third bridge arm 15 and the midpoint of the fourth bridge arm 16.

In this embodiment of this application, when a bias occurs in the primary-side voltage vp of the transformer 13, the power conversion apparatus 1 controls the power conversion apparatus 1 to switch from the first working mode to the second working mode or switch from the second working mode to the first working mode, so that when the voltage bias occurs in the primary-side voltage vp of the transformer 13, a lead-lag relationship between the first bridge arm 11 and the second bridge arm 12 is reversed before and after mode switching, and a bias borne by the primary-side voltage vp of the transformer 13 after mode switching is opposite to a bias borne by the primary-side voltage vp of the transformer 13 before mode switching, to cancel the bias borne by the primary-side voltage vp of the transformer 13 before mode switching, so as to avoid saturation of the transformer 13 and protect the power conversion apparatus 1.

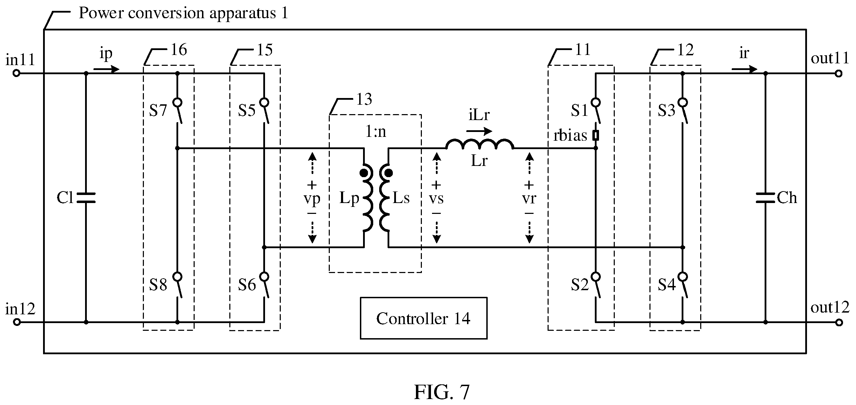

For example, FIG. 7 is another diagram of a structure of a power conversion apparatus according to this application. As shown in FIG. 7, compared with the power conversion apparatus 1 shown in FIG. 4, the first bridge arm 11 and the second bridge arm 12 are connected in parallel between the output ends out11 and out12 of the power conversion apparatus 1, and the third bridge arm 15 and the fourth bridge arm 16 are connected in parallel between the input ends in11 and in12 of the power conversion apparatus 1. Herein, for descriptions of a connection relationship between the transformer 13 and the inductor Lr, refer to the descriptions of the corresponding part in the power conversion apparatus 1 shown in FIG. 4. Details are not described herein.

In an implementation, after the power conversion apparatus 1 works, the controller 14 adjusts a switching frequency of the switching transistor in each bridge arm, a phase angle between the first bridge arm 11 and the second bridge arm 12, a phase angle between the third bridge arm 15 and the fourth bridge arm 16, and a phase angle between the first bridge arm 11 and the third bridge arm 15, so that the power conversion apparatus 1 is in a first working mode or a second working mode, to control output power of the power conversion apparatus 1. In the first working mode, a phase of the switching transistor S4 lags behind a phase of the switching transistor S1 by a first phase angle, and a phase of the switching transistor S5 lags behind the phase of the switching transistor S1 by a third phase angle. In the second working mode, the phase of the switching transistor S1 lags behind the phase of the switching transistor S4 by a second phase angle, and the phase of the switching transistor S5 lags behind the phase of the switching transistor S4 by a fourth phase angle.

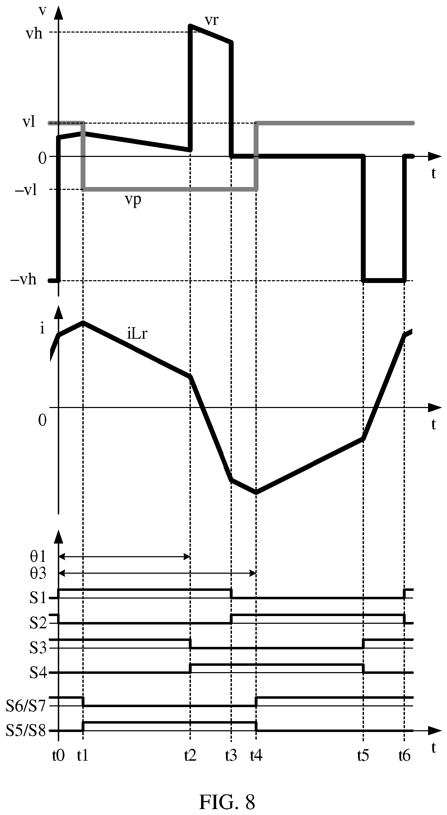

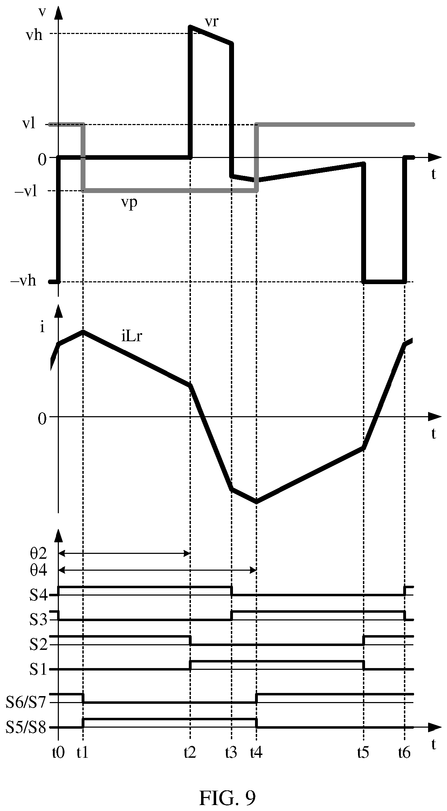

For better understanding, with reference to diagrams of voltage and current waveforms shown in FIG. 8 and FIG. 9, the following still describes, by using an example in which on-resistance of the switching transistor S1 is increased by bias resistance rbias and the phase angle between the third bridge arm 15 and the fourth bridge arm 16 is 0, a specific implementation of eliminating, by the power conversion apparatus 1, the voltage bias borne by the transformer 13.

In an embodiment, as shown in FIG. 8, in a switching period of the power conversion apparatus 1, the controller 14 controls a start turn-on moment of the switching transistor S4 to lag behind a start turn-on moment of the switching transistor S1, and controls a phase difference between a phase of the switching transistor S1 at the start turn-on moment and a phase of the switching transistor S4 at the start moment to be θ1, so that the phase of the switching transistor S4 lags behind the phase of the switching transistor S1 by the first phase angle θ1. In addition, the controller 14 further controls a start turn-on moment of the switching transistor S6 to lag behind the start turn-on moment of the switching transistor S1, and controls a phase difference between the phase of the switching transistor S1 at the start turn-on moment and a phase of the switching transistor S6 at the start turn-on moment to be the third phase angle θ3, so that the phase of the switching transistor S6 lags behind the phase of the switching transistor S1 by the third phase angle θ3. In addition, the controller 14 further controls the switching transistors S5 and S8 to be simultaneously turned on or off, so that the phase angle between the third bridge arm 15 and the fourth bridge arm 16 is 0. Therefore, the power conversion apparatus 1 is in the first working mode.

Specifically, the power conversion apparatus 1 is in a switching period (namely, a time interval from t0 to t6 shown in FIG. 8) in the first working mode. At a moment t0, the controller 14 controls all of the switching transistors S1, S3, S6, and S7 to be in an on state, and controls all of the switching transistors S2, S4, S5, and S8 to be in an off state. In a time interval from t0 to t1, switching states of the switching transistors in the four bridge arms remain the same as switching states at the moment t0. If the on-resistance of the switching transistor S1 is not increased by the bias resistance rbias, a primary-side voltage vp of the transformer 13 is vl, a secondary-side voltage vs of the transformer 13 is n*vl, and a voltage vr between the midpoint of the first bridge arm 11 and the midpoint of the second bridge arm 12 is 0. Therefore, it may be learned that a voltage borne by the inductor Lr is vs-vr=n*vl, to learn that a current iLr of the inductor Lr continuously increases. However, after the on-resistance of the switching transistor S1 is increased by the bias resistance rbias, because the switching transistor S1 is in the on state in the time interval from t0 to t1, the voltage vr between the midpoint of the first bridge arm 11 and the midpoint of the second bridge arm 12 has a specific positive bias in the time interval from t0 to t1.

At a moment t1, the controller 14 controls the switching transistors S1 and S3 to be still in the on state, controls the switching transistors S2 and S4 to be still in the off state, controls both the switching transistors S5 and S8 to switch to the on state, and controls both the switching transistors S6 and S7 to switch to the off state. In a time interval from t1 to t2, the switching states of the switching transistors in the four bridge arms remain the same as switching states at the moment t1. If the on-resistance of the switching transistor S1 is not increased by the bias resistance rbias, the primary-side voltage vp of the transformer 13 is -vl, the secondary-side voltage vs of the transformer 13 is -n*vl, and the voltage vr between the midpoint of the first bridge arm 11 and the midpoint of the second bridge arm 12 is 0. Therefore, it may be learned that the voltage borne by the inductor Lr is vs-vr=-n*vl, to learn that the current iLr of the inductor Lr starts to continuously decrease. However, after the on-resistance of the switching transistor S1 is increased by the bias resistance rbias, because the switching transistor S1 is in the on state in the time interval from t1 to t2, the voltage vr between the midpoint of the first bridge arm 11 and the midpoint of the second bridge arm 12 has a specific positive bias in the time interval from t1 to t2.

At a moment t2, the controller 14 controls the switching transistors S1, S5, and S8 to be still in the on state, controls the switching transistors S2, S6, and S7 to be still in the off state, controls the switching transistor S3 to switch to the off state, and controls the switching transistor S4 to switch to the on state. In a time interval from t2 to t3, the switching states of the switching transistors in the four bridge arms remain the same as switching states at the moment t2. If the on-resistance of the switching transistor S1 is not increased by the bias resistance rbias, the primary-side voltage vp of the transformer 13 is -vl, the secondary-side voltage vs of the transformer 13 is -n*vl, and the voltage vr between the midpoint of the first bridge arm 11 and the midpoint of the second bridge arm 12 is vh. Therefore, it may be learned that the voltage borne by the inductor Lr is vs-vr=-n*vl-vh, to learn that the current iLr of the inductor Lr continuously decreases, and decreases from a positive value to a negative value. However, after the on-resistance of the switching transistor S1 is increased by the bias resistance rbias, because the switching transistor S1 is still in the on state in the time interval from t2 to t3, the voltage vr between the midpoint of the first bridge arm 11 and the midpoint of the second bridge arm 12 also has a specific bias in the time interval from t2 to t3.

At a moment t3, the controller 14 controls the switching transistor S1 to switch to the off state, controls the switching transistor S2 to switch to the on state, controls the switching transistors S3, S6, and S7 to be still in the off state, and controls the switching transistors S4, S5, and S8 to be still in the on state. In a time interval from t3 to t4, the switching states of the switching transistors in the four bridge arms remain the same as switching states at the moment t3, the primary-side voltage vp of the transformer 13 is -vl, the secondary-side voltage vs of the transformer 13 is -n*vl, and the voltage vr between the midpoint of the first bridge arm 11 and the midpoint of the second bridge arm 12 is 0. Therefore, it may be learned that the voltage borne by the inductor Lr is vs-vr=-n*vl, to learn that the current iLr of the inductor Lr continuously decreases. Because the switching transistor S1 is in the off state in this time interval, the voltage vr between the midpoint of the first bridge arm 11 and the midpoint of the second bridge arm 12 has no bias in the time interval from t3 to t4.

At a moment t4, the controller 14 controls the switching transistors S1 and S3 to be still in the off state, controls the switching transistors S2 and S4 to be still in the on state, controls both the switching transistors S5 and S8 to switch to the off state, and controls both the switching transistors S6 and S7 to switch to the on state. In a time interval from t4 to t5, the switching states of the switching transistors in the four bridge arms remain the same as switching states at the moment t4, the primary-side voltage vp of the transformer 13 is vl, the secondary-side voltage vs of the transformer 13 is n*vl, and the voltage vr between the midpoint of the first bridge arm 11 and the midpoint of the second bridge arm 12 is 0. Therefore, it may be learned that the voltage borne by the inductor Lr is vs-vr=n*vl, to learn that the current iLr of the inductor Lr starts to continuously increase. Because the switching transistor S1 is in the off state in this time interval, the voltage vr between the midpoint of the first bridge arm 11 and the midpoint of the second bridge arm 12 has no bias in the time interval from t4 to t5.

At a moment t5, the controller 14 controls the switching transistors S1, S5, and S8 to be still in the off state, controls the switching transistors S2, S6, and S7 to be still in the on state, controls the switching transistor S3 to switch to the on state, and controls the switching transistor S4 to switch to the off state. In a time interval from t5 to t6, the switching states of the switching transistors in the four bridge arms remain the same as switching states at the moment t5, the primary-side voltage vp of the transformer 13 is vl, the secondary-side voltage vs of the transformer 13 is n*vl, and the voltage vr between the midpoint of the first bridge arm 11 and the midpoint of the second bridge arm 12 is -vh. Therefore, it may be learned that the voltage borne by the inductor Lr is vs-vr=n*vl+vh, to learn that the current iLr of the inductor Lr continuously increases, and increases from a negative value to a positive value. Because the switching transistor S1 is in the off state in this time interval, the voltage vr between the midpoint of the first bridge arm 11 and the midpoint of the second bridge arm 12 has no bias in the time interval from t5 to t6.

After the power conversion apparatus 1 controls, based on a control time sequence of the switching transistors in FIG. 8, the power conversion apparatus 1 to be in the first working mode, the controller 14 detects electrical data of the transformer 13. When the electrical data of the transformer 13 is greater than a threshold, it indicates that the secondary-side voltage vs of the transformer 13 has a positive bias, and the controller 14 controls the power conversion apparatus 1 to switch from the first working mode to the second working mode. The electrical data of the transformer 13 includes an input voltage, an input current, an output voltage, or an output current. Herein, for specific descriptions of the threshold, refer to the descriptions of the corresponding part in the embodiment of switching the power conversion apparatus 1 shown in FIG. 4 from the first working mode to the second working mode. Details are not described herein. Specifically, when the input voltage of the transformer 13 is greater than the first threshold and/or the input current of the transformer 13 is greater than the second threshold, the controller 14 controls the power conversion apparatus 1 to switch from the first working mode to the second working mode. Optionally, when the output voltage of the transformer 13 is greater than the third threshold and/or the output current of the transformer 13 is greater than the fourth threshold, the controller 14 controls the power conversion apparatus 1 to switch from the first working mode to the second working mode. For example, all of the four thresholds are 0.

A specific control manner in which the controller 14 controls the power conversion apparatus 1 to switch to the second working mode is as follows:
As shown in FIG. 9, in a switching period of the power conversion apparatus 1, the controller 14 controls the start turn-on moment of the switching transistor S1 to lag behind the start turn-on moment of the switching transistor S4, and controls the phase difference between the phase of the switching transistor S1 at the start turn-on moment and the phase of the switching transistor S4 at the start moment to be θ2, so that the phase of the switching transistor S1 lags behind the phase of the switching transistor S4 by the second phase angle θ2. In addition, the controller 14 further controls the start turn-on moment of the switching transistor S6 to lag behind the start turn-on moment of the switching transistor S4, and controls a phase difference between the phase of the switching transistor S4 at the start turn-on moment and the phase of the switching transistor S6 at the start turn-on moment to be the fourth phase angle θ4, so that the phase of the switching transistor S6 lags behind the phase of the switching transistor S4 by the fourth phase angle θ4. In addition, the controller 14 further controls the switching transistors S5 and S8 to be simultaneously turned on or off, so that the phase angle between the third bridge arm 15 and the fourth bridge arm 16 is 0. Therefore, the power conversion apparatus 1 is in the second working mode.

Specifically, the power conversion apparatus 1 is in a switching period (namely, a time interval from t0 to t6 shown in FIG. 9) in the second working mode. At a moment t0, the controller 14 controls all of the switching transistors S2, S4, S6, and S7 to be in the on state, and controls all of the switching transistors S1, S3, S5, and S8 to be in the off state. In a time interval from t0 to t1, the switching states of the switching transistors in the four bridge arms remain the same as switching states at the moment t0, the primary-side voltage vp of the transformer 13 is vl, the secondary-side voltage vs of the transformer 13 is n*vl, and the voltage vr between the midpoint of the first bridge arm 11 and the midpoint of the second bridge arm 12 is 0. Therefore, it may be learned that the voltage borne by the inductor Lr is vs-vr=n*vl, to learn that the current iLr of the inductor Lr continuously increases. Because the switching transistor S1 is in the off state in this time interval, the voltage vr between the midpoint of the first bridge arm 11 and the midpoint of the second bridge arm 12 has no bias in the time interval from t0 to t1.

At a moment t1, the controller 14 controls the switching transistors S2 and S4 to be still in the on state, controls the switching transistors S1 and S3 to be still in the off state, controls both the switching transistors S5 and S8 to switch to the on state, and controls both the switching transistors S6 and S7 to switch to the off state. In a time interval from t1 to t2, the switching states of the switching transistors in the four bridge arms remain the same as switching states at the moment t1, the primary-side voltage vp of the transformer 13 is -vl, the secondary-side voltage vs of the transformer 13 is -n*vl, and the voltage vr between the midpoint of the first bridge arm 11 and the midpoint of the second bridge arm 12 is 0. Therefore, it may be learned that the voltage borne by the inductor Lr is vs-vr=-n*vl, to learn that the current iLr of the inductor Lr starts to continuously decrease. Because the switching transistor S1 is in the off state in this time interval, the voltage vr between the midpoint of the first bridge arm 11 and the midpoint of the second bridge arm 12 has no bias in the time interval from t1 to t2.

At a moment t2, the controller 14 controls the switching transistors S4, S5, and S8 to be still in the on state, controls the switching transistors S3, S6, and S7 to be still in the off state, controls the switching transistor S2 to switch to the off state, and controls the switching transistor S1 to switch to the on state. In a time interval from t2 to t3, the switching states of the switching transistors in the four bridge arms remain the same as switching states at the moment t2. If the on-resistance of the switching transistor S1 is not increased by the bias resistance rbias, the primary-side voltage vp of the transformer 13 is -vl, the secondary-side voltage vs of the transformer 13 is -n*vl, and the voltage vr between the midpoint of the first bridge arm 11 and the midpoint of the second bridge arm 12 is vh. Therefore, it may be learned that the voltage borne by the inductor Lr is vs-vr=-n*vl-vh, to learn that the current iLr of the inductor Lr continuously decreases, and decreases from a positive value to a negative value. However, after the on-resistance of the switching transistor S1 is increased by the bias resistance rbias, because the switching transistor S1 is in the on state in the time interval from t2 to t3, the voltage vr between the midpoint of the first bridge arm 11 and the midpoint of the second bridge arm 12 has a specific bias in the time interval from t2 to t3.

At a moment t3, the controller 14 controls the switching transistor S4 to switch to the off state, controls the switching transistor S3 to switch to the on state, controls the switching transistors S2, S6, and S7 to be still in the off state, and controls the switching transistors S1, S5, and S8 to be still in the on state. In a time interval from t3 to t4, the switching states of the switching transistors in the four bridge arms remain the same as switching states at the moment t3. If the on-resistance of the switching transistor S1 is not increased by the bias resistance rbias, the primary-side voltage vp of the transformer 13 is -vl, the secondary-side voltage vs of the transformer 13 is -n*vl, and the voltage vr between the midpoint of the first bridge arm 11 and the midpoint of the second bridge arm 12 is 0. Therefore, it may be learned that the voltage borne by the inductor Lr is vs-vr=-n*vl, to learn that the current iLr of the inductor Lr continuously decreases. However, after the on-resistance of the switching transistor S1 is increased by the bias resistance rbias, because the switching transistor S1 is in the on state in the time interval from t3 to t4, and the current iLr of the inductor Lr is a negative value, the voltage vr between the midpoint of the first bridge arm 11 and the midpoint of the second bridge arm 12 has a specific negative bias in the time interval from t3 to t4.

At a moment t4, the controller 14 controls the switching transistors S2 and S4 to be still in the off state, controls the switching transistors S1 and S3 to be still in the on state, controls both the switching transistors S5 and S8 to switch to the off state, and controls both the switching transistors S6 and S7 to switch to the on state. In a time interval from t4 to t5, the switching states of the switching transistors in the four bridge arms remain the same as switching states at the moment t4. If the on-resistance of the switching transistor S1 is not increased by the bias resistance rbias, the primary-side voltage vp of the transformer 13 is vl, the secondary-side voltage vs of the transformer 13 is n*vl, and the voltage vr between the midpoint of the first bridge arm 11 and the midpoint of the second bridge arm 11 is 0. Therefore, it may be learned that the voltage borne by the inductor Lr is vs-vr=n*vl, to learn that the current iLr of the inductor Lr starts to continuously increase. However, after the on-resistance of the switching transistor S1 is increased by the bias resistance rbias, because the switching transistor S1 is in the on state in the time interval from t4 to t5, and the current iLr of the inductor Lr is a negative value, the voltage vr between the midpoint of the first bridge arm 11 and the midpoint of the second bridge arm 12 also has a specific negative bias in the time interval from t4 to t5.

At a moment t5, the controller 14 controls the switching transistors S4, S5, and S8 to be still in the off state, controls the switching transistors S3, S6, and S7 to be still in the on state, controls the switching transistor S2 to switch to the on state, and controls the switching transistor S1 to switch to the off state. In a time interval from t5 to t6, the switching states of the switching transistors in the four bridge arms remain the same as switching states at the moment t5, the primary-side voltage vp of the transformer 13 is vl, the secondary-side voltage vs of the transformer 13 is n*vl, and the voltage vr between the midpoint of the first bridge arm 11 and the midpoint of the second bridge arm 12 is -vh. Therefore, it may be learned that the voltage borne by the inductor Lr is vs-vr=n*vl+vh, to learn that the current iLr of the inductor Lr continuously increases, and increases from a negative value to a positive value. Because the switching transistor S1 is in the off state in this time interval, the voltage vr between the midpoint of the first bridge arm 11 and the midpoint of the second bridge arm 12 has no bias in the time interval from t5 to t6.

It may be understood that when the power conversion apparatus 1 is in the first working mode and the voltage vr between the midpoint of the first bridge arm and the midpoint of the second bridge arm has a positive bias, if the inductor Lr is kept to transmit consistent power, the secondary-side voltage vs also has a positive bias when vr passes through the current iLr of the inductor. In this case, the power conversion apparatus 1 controls the power conversion apparatus 1 to switch to the second working mode, so that when the power conversion apparatus 1 is in the second working mode, the voltage vr between the midpoint of the first bridge arm and the midpoint of the second bridge arm has a negative bias, and the secondary-side voltage vs also has a negative bias, to cancel the positive bias borne by the secondary-side voltage vs of the transformer 13, so as to avoid saturation of the transformer 13, avoid a case in which the transformer 13 fails to work and consequently the power conversion apparatus 1 is damaged, and protect the power conversion apparatus 1.

After the power conversion apparatus 1 controls, based on a control time sequence of the switching transistors in FIG. 9, the power conversion apparatus 1 to be in the second working mode, the controller 14 detects the electrical data of the transformer 13. When the electrical data of the transformer 13 is less than or equal to the threshold, it indicates that the secondary-side voltage vs of the transformer 13 has a negative bias, and the controller 14 controls the power conversion apparatus 1 to switch from the second working mode to the first working mode. The electrical data of the transformer 13 includes an input voltage, an input current, an output voltage, or an output current. Herein, for specific descriptions of the threshold, refer to the descriptions of the corresponding part in the embodiment of switching the power conversion apparatus 1 shown in FIG. 4 from the first working mode to the second working mode. Details are not described herein. Specifically, when the input voltage of the transformer 13 is less than or equal to the first threshold and/or the input current of the transformer 13 is less than or equal to the second threshold, the controller 14 controls the power conversion apparatus 1 to switch from the second working mode to the first working mode. Optionally, when the output voltage of the transformer 13 is less than or equal to the third threshold and/or the output current of the transformer 13 is less than or equal to the fourth threshold, the controller 14 controls the power conversion apparatus 1 to switch from the second working mode to the first working mode.

It may be understood that when the power conversion apparatus 1 is in the second working mode and the secondary-side voltage vs of the transformer 13 has a negative bias, the power conversion apparatus 1 controls the power conversion apparatus 1 to switch to the first working mode, so that when the power conversion apparatus 1 is in the first working mode, the secondary-side voltage vs of the transformer 13 has a positive bias, to cancel the negative bias borne by the secondary-side voltage vs of the transformer 13, so as to avoid saturation of the transformer 13, avoid a case in which the transformer 13 fails to work and consequently the power conversion apparatus 1 is damaged, and protect the power conversion apparatus 1.

It should be noted that the second phase angle θ2 shown in FIG. 9 is the same as the first phase angle θ1 shown in FIG. 8, and the fourth phase angle θ4 shown in FIG. 9 is the same as the third phase angle θ3 shown in FIG. 8. Herein, for beneficial effects of the second phase angle θ2 being the same as the first phase angle θ1, beneficial effects of the fourth phase angle θ4 being the same as the third phase angle θ3, and value ranges of the first phase angle θ1 and the second phase angle θ2, refer to the descriptions of the corresponding part in the power conversion apparatus 1 shown in FIG. 4. Details are not described herein.

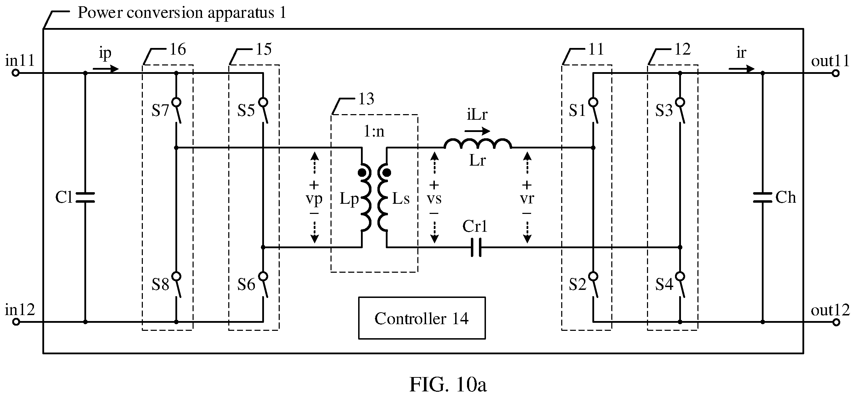

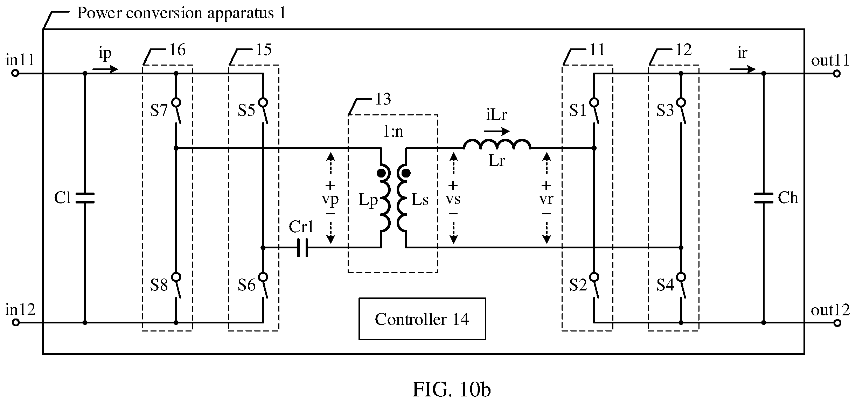

Optionally, the power conversion apparatus 1 shown in FIG. 7 may further include a first resonant capacitor. For details, refer to a power conversion apparatus 1 shown in FIG. 10a. As shown in FIG. 10a, the power conversion apparatus 1 further includes a first resonant capacitor Cr1. The first resonant capacitor Cr1, the inductor Lr, and the secondary-side winding Ls are connected in series between the midpoint of the first bridge arm 11 and the midpoint of the second bridge arm 12. The first resonant capacitor Cr1 and the inductor Lr form a resonant circuit, so that the power conversion apparatus 1 is a resonant power conversion apparatus, and a current waveform of the inductor Lr in the power conversion apparatus 1 shown in FIG. 10a tends to be a sine wave. This helps reduce a peak value of a current flowing on a switching transistor in the power conversion apparatus 1, and helps the switching transistor in the power conversion apparatus 1 implement soft switching, to reduce a loss of the switching transistor, thereby improving efficiency of the power conversion apparatus 1. In addition, for a part other than the current waveform of the inductor Lr in a diagram of a voltage and a current of the power conversion apparatus 1 shown in FIG. 10a, refer to the descriptions of the corresponding part in the diagram of the voltage and the current of the power conversion apparatus 1 shown in FIG. 7. Details are not described herein. Optionally, the first resonant capacitor Cr1 in the power conversion apparatus 1 shown in FIG. 10a and the inductor Lr may alternatively be respectively connected to two different windings of the transformer 13. For details, refer to a power conversion apparatus 1 shown in FIG. 10b. As shown in FIG. 10b, the first resonant capacitor Cr1 and the primary-side winding Lp are connected in series between the midpoint of the third bridge arm 15 and the midpoint of the fourth bridge arm 16, and the inductor Lr and the secondary-side winding Ls are connected in series between the midpoint of the first bridge arm 11 and the midpoint of the second bridge arm 12.

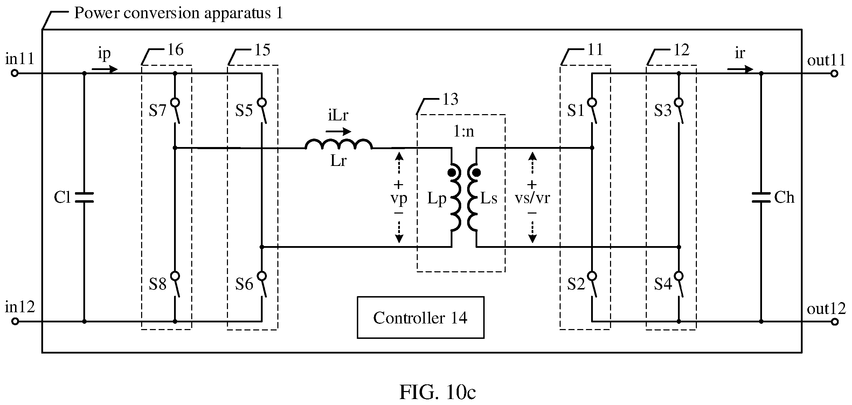

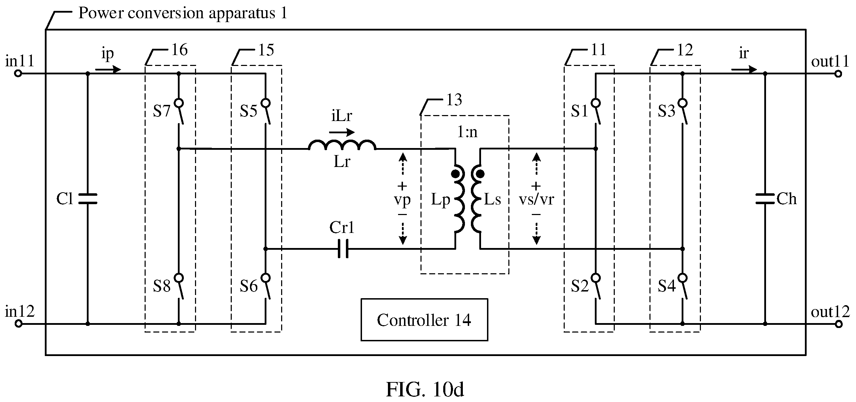

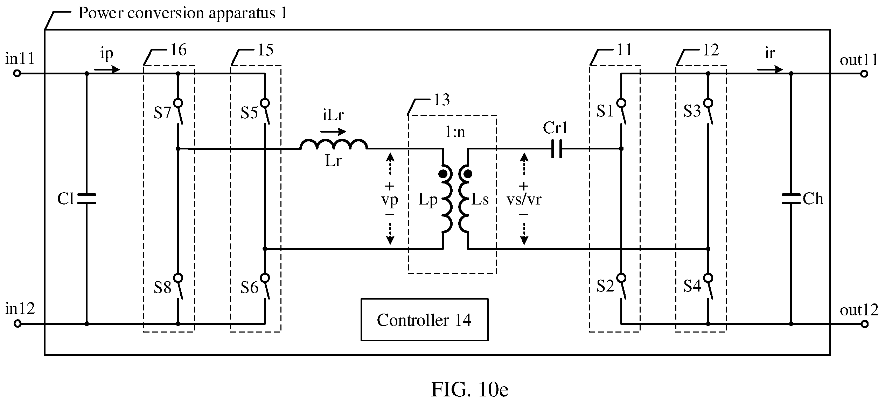

Optionally, the inductor Lr in the power conversion apparatus 1 shown in FIG. 7 may alternatively be connected in series to the primary-side winding Ls. For details, refer to power conversion apparatuses 1 shown in FIG. 10c to FIG. 10e. As shown in FIG. 10c, the inductor Lr and the primary-side winding Lp are connected in series between the midpoint of the third bridge arm 15 and the midpoint of the fourth bridge arm 16, and the two ends of the secondary-side winding Ls are respectively connected to the midpoint of the first bridge arm 11 and the midpoint of the second bridge arm 12. Optionally, the power conversion apparatus 1 shown in FIG. 10c may further include a first resonant capacitor. For details, refer to a power conversion apparatus 1 shown in FIG. 10d. As shown in FIG. 10d, the power conversion apparatus 1 further includes a first resonant capacitor Cr1. The first resonant capacitor Cr1, the inductor Lr, and the primary-side winding Ls are connected in series between the midpoint of the third bridge arm 15 and the midpoint of the fourth bridge arm 16. The first resonant capacitor Cr1 and the inductor Lr form a resonant circuit, so that the power conversion apparatus 1 is a resonant power conversion apparatus, and a current waveform of the inductor Lr in the power conversion apparatus 1 shown in FIG. 10d tends to be a sine wave. This helps reduce a peak value of a current flowing on a switching transistor in the power conversion apparatus 1, and helps the switching transistor in the power conversion apparatus 1 implement soft switching, to reduce a loss of the switching transistor, thereby improving efficiency of the power conversion apparatus 1. Optionally, the first resonant capacitor Cr1 in the power conversion apparatus 1 shown in FIG. 10d and the inductor Lr may alternatively be respectively connected to two different windings of the transformer 13. For details, refer to a power conversion apparatus 1 shown in FIG. 10e. As shown in FIG. 10e, the inductor Lr and the primary-side winding Lp are connected in series between the midpoint of the third bridge arm 15 and the midpoint of the fourth bridge arm 16, and the first resonant capacitor Cr1 and the secondary-side winding Ls are connected in series between the midpoint of the first bridge arm 11 and the midpoint of the second bridge arm 12.

In this embodiment of this application, when a bias occurs in the secondary-side voltage vs of the transformer 13, the power conversion apparatus 1 controls the power conversion apparatus 1 to switch between the first working mode and the second working mode, so that when the bias occurs in the secondary-side voltage vs of the transformer 13, a lead-lag relationship between the first bridge arm 11 and the second bridge arm 12 is reversed before and after mode switching, and a bias borne by the secondary-side voltage vs of the transformer 13 after mode switching is opposite to a bias borne by the secondary-side voltage vs of the transformer 13 before mode switching, to cancel the bias borne by the secondary-side voltage vs of the transformer 13 before mode switching, so as to avoid saturation of the transformer 13 and protect the power conversion apparatus 1.

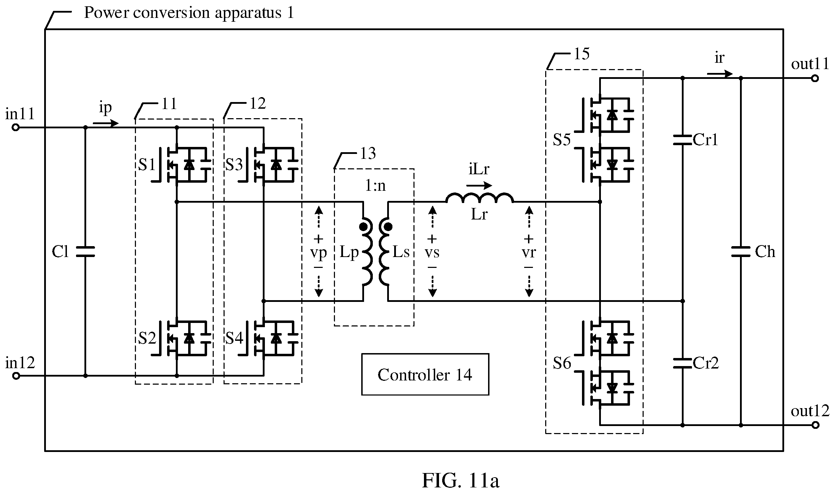

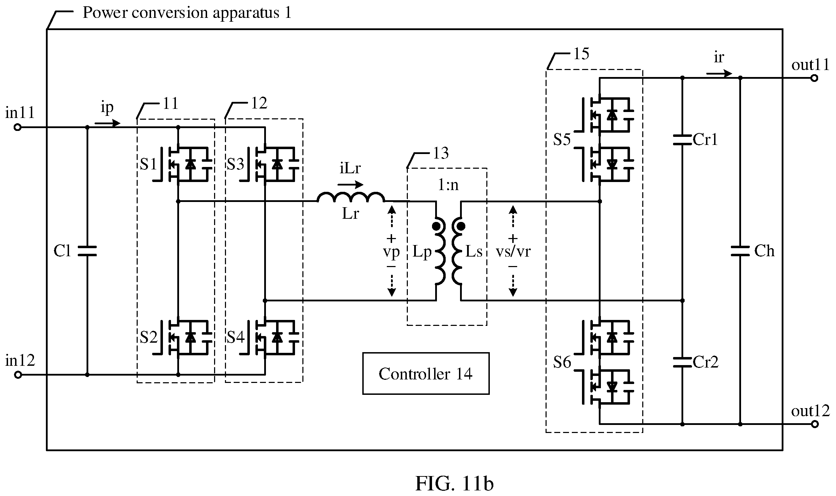

In addition, the control manner in which the power conversion apparatus 1 shown in FIG. 4 eliminates the bias in the primary-side voltage vp of the transformer 13 is also applicable to power conversion apparatuses 1 shown in FIG. 11a and FIG. 11b. As shown in FIG. 11a, the power conversion apparatus 1 includes a first bridge arm 11, a second bridge arm 12, a transformer 13, a controller 14, a third bridge arm 15, an inductor Lr, a first resonant capacitor Cr1, and a second resonant capacitor Cr2. The third bridge arm 15 includes a switching transistor S5 and a switching transistor S6 that are connected in series. Each of the switching transistors S5 and S6 includes two MOSFETs that are connected in reverse series. The third bridge arm 15 is connected in parallel between output ends out11 and out12 of the power conversion apparatus 1. The first resonant capacitor Cr1 and the second resonant capacitor Cr2 are connected in series and then connected in parallel to the third bridge arm 15. The inductor Lr and a secondary-side winding Ls are connected in series between a midpoint of the third bridge arm 15 and a capacitor midpoint. The capacitor midpoint is a connection point between the first resonant capacitor Cr1 and the second resonant capacitor Cr2. Herein, for a connection relationship between the first bridge arm 11, the second bridge arm 12, and the transformer 13 in the power conversion apparatus 1 shown in FIG. 11a, refer to the descriptions of the corresponding part in the power conversion apparatus 1 shown in FIG. 4. Details are not described herein. Optionally, the inductor Lr in the power conversion apparatus 1 shown in FIG. 11a may alternatively be connected in series to a primary-side winding Lp. For details, refer to the power conversion apparatus 1 shown in FIG. 11b. As shown in FIG. 11b, the inductor Lr and the primary-side winding Lp are connected in series between a midpoint of the first bridge arm 11 and a midpoint of the second bridge arm 12, and two ends of a secondary-side winding Ls are respectively connected to a midpoint of the third bridge arm 15 and a capacitor midpoint.

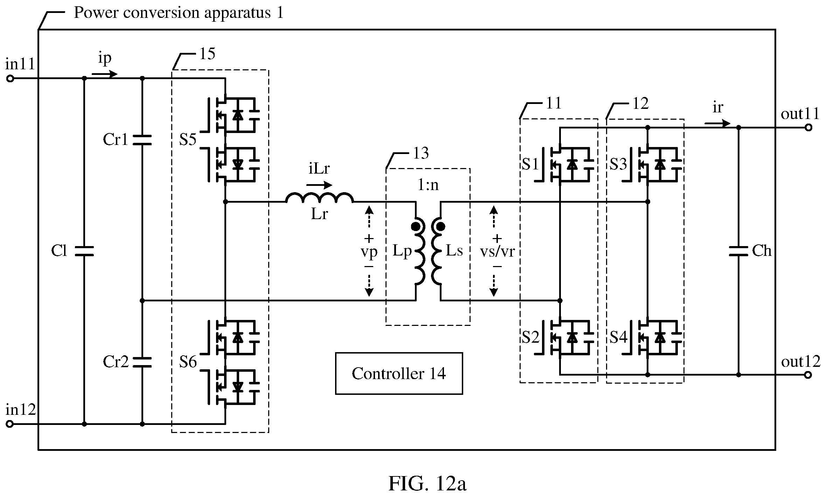

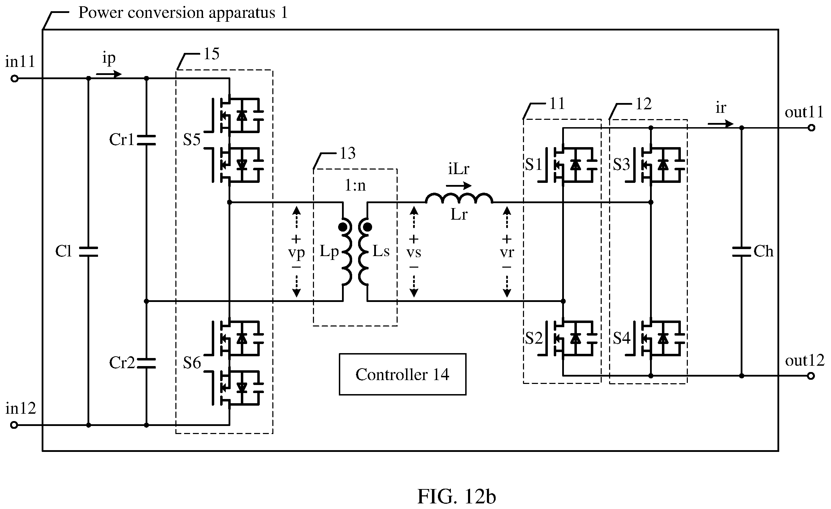

The control manner in which the power conversion apparatus 1 shown in FIG. 7 eliminates the bias in the secondary-side voltage vs of the transformer 13 is also applicable to power conversion apparatuses 1 shown in FIG. 12a and FIG. 12b. As shown in FIG. 12a, the power conversion apparatus 1 includes a first bridge arm 11, a second bridge arm 12, a transformer 13, a controller 14, a third bridge arm 15, an inductor Lr, a first resonant capacitor Cr1, and a second resonant capacitor Cr2. The third bridge arm 15 includes a switching transistor S5 and a switching transistor S6 that are connected in series. Each of the switching transistors S5 and S6 includes two MOSFETs that are connected in reverse series. The third bridge arm 15 is connected in parallel between input ends in11 and in12 of the power conversion apparatus 1. The first resonant capacitor Cr1 and the second resonant capacitor Cr2 are connected in series and then connected in parallel to the third bridge arm 15. The inductor Lr and a primary-side winding Lp are connected in series between a midpoint of the third bridge arm 15 and a capacitor midpoint. The capacitor midpoint is a connection point between the first resonant capacitor Cr1 and the second resonant capacitor Cr2. The first bridge arm 11 and the second bridge arm 12 are connected in parallel between output ends out11 and out12 of the power conversion apparatus 1, and two ends of a secondary-side winding Ls are respectively connected to a midpoint of the first bridge arm 11 and a midpoint of the second bridge arm 12. Optionally, the inductor Lr in the power conversion apparatus 1 shown in FIG. 12a may alternatively be connected in series to a secondary-side winding Ls. For details, refer to the power conversion apparatus 1 shown in FIG. 12b. As shown in FIG. 12b, the inductor Lr and the secondary-side winding Ls are connected in series between a midpoint of the first bridge arm 11 and a midpoint of the second bridge arm 12, and two ends of a primary-side winding Lp are respectively connected to a midpoint of the third bridge arm 15 and a capacitor midpoint.

It should be noted that the control manner of eliminating the voltage bias borne by the transformer 13 provided in this application is also applicable to a circuit structure in which positions of the first bridge arm 11 and the second bridge arm 12 are exchanged and/or positions of the third bridge arm 15 and the fourth bridge arm 16 are exchanged in the power conversion apparatuses 1 shown in FIG. 3a to FIG. 12b.

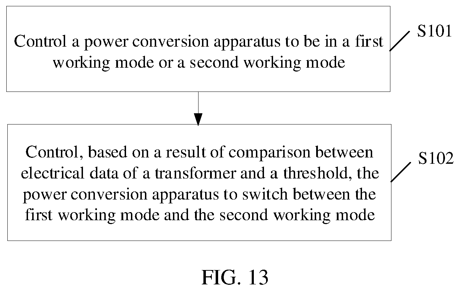

FIG. 13 is a schematic flowchart of a control method for a power conversion apparatus according to this application. The control method for a power conversion apparatus provided in this embodiment of this application is applicable to the power conversion apparatuses 1 shown in FIG. 3a to FIG. 12b. The control method for a power conversion apparatus may include the following steps.

S101: Control the power conversion apparatus to be in a first working mode or a second working mode.

In the first working mode, a phase of a fourth switching transistor lags behind a phase of a first switching transistor by a first phase angle. In the second working mode, the phase of the first switching transistor lags behind the phase of the fourth switching transistor by a second phase angle. Both the first phase angle and the second phase angle are greater than or equal to 0° and less than or equal to 180°. For example, the first phase angle is the same as the second phase angle.

Optionally, in the first working mode, a phase of a fourth switching transistor lags behind a phase of a first switching transistor by a first phase angle, and a phase of a fifth switching transistor lags behind the phase of the first switching transistor by a third phase angle. In the second working mode, the phase of the first switching transistor lags behind the phase of the fourth switching transistor by a second phase angle, and the phase of the fifth switching transistor lags behind the phase of the fourth switching transistor by a fourth phase angle. For example, the first phase angle is the same as the second phase angle, and the third phase angle is the same as the fourth phase angle.

S102: Control, based on a result of comparison between electrical data of a transformer and a threshold, the power conversion apparatus to switch between the first working mode and the second working mode.

In an optional implementation, the power conversion apparatus is controlled, when the power conversion apparatus is in the first working mode and the electrical data of the transformer is greater than the threshold, to switch to the second working mode.

In another optional implementation, the power conversion apparatus is controlled, when the power conversion apparatus is in the second working mode and the electrical data of the transformer is less than or equal to the threshold, to switch to the first working mode.

In specific implementation, for more operations performed by the power conversion apparatus in the control method for a power conversion apparatus provided in this application, refer to the implementations performed by the power conversion apparatuses 1 shown in FIG. 3a to FIG. 12b. Details are not described herein.

In this embodiment of this application, when a voltage bias occurs in the transformer, the power conversion apparatus controls the power conversion apparatus to switch between the first working mode and the second working mode, so that when the voltage bias occurs in the transformer, a lead-lag relationship between a first bridge arm and a second bridge arm is reversed before and after mode switching. Therefore, an amplitude and a shape of a current waveform of an inductor remain unchanged before and after mode switching, but there is a different phase relative to the first bridge arm, so that a voltage bias borne by the transformer after mode switching is opposite to a voltage bias borne by the transformer before mode switching, to cancel the voltage bias borne by the transformer before mode switching, so as to avoid saturation of the transformer and protect the power conversion apparatus.

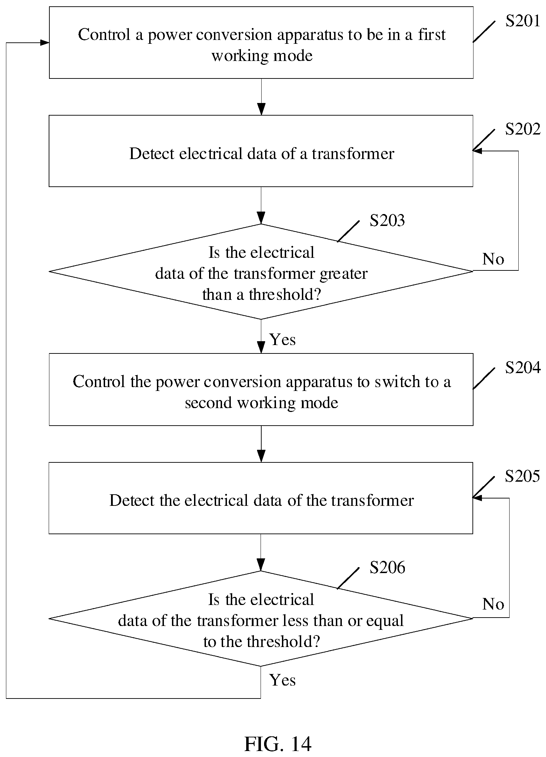

FIG. 14 is another schematic flowchart of a control method for a power conversion apparatus according to this application. The control method for a power conversion apparatus provided in this embodiment of this application is applicable to the power conversion apparatuses 1 shown in FIG. 3a to FIG. 12b. The control method for a power conversion apparatus may include the following steps.

S201: Control the power conversion apparatus to be in a first working mode.

In the first working mode, a phase of a fourth switching transistor lags behind a phase of a first switching transistor by a first phase angle. The first phase angle is greater than or equal to 0° and less than or equal to 180°. Optionally, in the first working mode, a phase of a fourth switching transistor lags behind a phase of a first switching transistor by a first phase angle, and a phase of a fifth switching transistor lags behind the phase of the first switching transistor by a third phase angle.

After being in the first working mode, the power conversion apparatus performs step S202.

S202: Detect electrical data of a transformer.

The electrical data of the transformer includes an input voltage, an input current, an output voltage, or an output current of the transformer.

S203: Determine whether the electrical data of the transformer is greater than a threshold.

Specifically, the power conversion apparatus performs step S204 when the electrical data of the transformer is greater than the threshold. Otherwise, the power conversion apparatus performs step S202.

S204: Control the power conversion apparatus to switch to a second working mode.

When in the first working mode, the phase of the fourth switching transistor lags behind the phase of the first switching transistor by the first phase angle, in the second working mode, the phase of the first switching transistor lags behind the phase of the fourth switching transistor by a second phase angle. When in the first working mode, the phase of the fourth switching transistor lags behind the phase of the first switching transistor by the first phase angle, and the phase of the fifth switching transistor lags behind the phase of the first switching transistor by the third phase angle, in the second working mode, the phase of the first switching transistor lags behind the phase of the fourth switching transistor by a second phase angle, and the phase of the fifth switching transistor lags behind the phase of the fourth switching transistor by a fourth phase angle. The second phase angle is greater than or equal to 0° and less than or equal to 180°.

After being in the second working mode, the power conversion apparatus performs step S205.

S205: Detect the electrical data of the transformer.

S206: Determine whether the electrical data of the transformer is less than or equal to the threshold.

Specifically, the power conversion apparatus performs step S201 when the electrical data of the transformer is less than or equal to the threshold. Otherwise, the power conversion apparatus performs step S205.

In specific implementation, for more operations performed by the power conversion apparatus in the control method for a power conversion apparatus provided in this application, refer to the implementations performed by the power conversion apparatuses 1 shown in FIG. 3a to FIG. 12b. Details are not described herein.

In this embodiment of this application, when a voltage bias occurs in the transformer, the power conversion apparatus controls the power conversion apparatus to switch between the first working mode and the second working mode, so that when the voltage bias occurs in the transformer, a lead-lag relationship between a first bridge arm and a second bridge arm is reversed before and after mode switching. Therefore, an amplitude and a shape of a current waveform of an inductor remain unchanged before and after mode switching, but there is a different phase relative to the first bridge arm, so that a voltage bias borne by the transformer after mode switching is opposite to a voltage bias borne by the transformer before mode switching, to cancel the voltage bias borne by the transformer before mode switching, so as to avoid saturation of the transformer and protect the power conversion apparatus.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power conversion apparatus, configured to be connected between a direct current power supply and a power grid or a load for energy conversion, wherein the power conversion apparatus comprises a first bridge arm, a second bridge arm, a transformer, and a controller, the transformer comprises a primary-side winding and a secondary-side winding, the first bridge arm comprises a first switching transistor and a second switching transistor that are connected in series, and the second bridge arm comprises a third switching transistor and a fourth switching transistor that are connected in series;
the first bridge arm and the second bridge arm are connected in parallel, and a midpoint of the first bridge arm and a midpoint of the second bridge arm are respectively connected to two ends of the primary-side winding or two ends of the secondary-side winding; and the first switching transistor is connected to the third switching transistor; and
the controller is configured to: control, when electrical data of the transformer is greater than a threshold and a phase of the fourth switching transistor lags behind a phase of the first switching transistor by a first phase angle, the phase of the first switching transistor to lag behind the phase of the fourth switching transistor by a second phase angle; and
control, when the electrical data of the transformer is less than or equal to the threshold and the phase of the first switching transistor lags behind the phase of the fourth switching transistor by the second phase angle, the phase of the fourth switching transistor to lag behind the phase of the first switching transistor by the first phase angle, wherein both the first phase angle and the second phase angle are greater than or equal to 0° and less than or equal to 180°, and the electrical data of the transformer comprises an input voltage, an input current, an output voltage, or an output current of the transformer.

2. The power conversion apparatus according to claim 1, wherein the first phase angle is the same as the second phase angle.

3. The power conversion apparatus according to claim 1 or 2, wherein the power conversion apparatus further comprises a third bridge arm; the midpoint of the first bridge arm and the midpoint of the second bridge arm are respectively connected to the two ends of the primary-side winding, and a midpoint of the third bridge arm is connected to the secondary-side winding; or the midpoint of the first bridge arm and the midpoint of the second bridge arm are respectively connected to the two ends of the secondary-side winding, and a midpoint of the third bridge arm is connected to the primary-side winding; and the third bridge arm comprises a fifth switching transistor and a sixth switching transistor that are connected in series; and
the controller is configured to: control, when the electrical data of the transformer is greater than the threshold, the phase of the fourth switching transistor lags behind the phase of the first switching transistor by the first phase angle, and a phase of the fifth switching transistor lags behind the phase of the first switching transistor by a third phase angle, the phase of the first switching transistor to lag behind the phase of the fourth switching transistor by the second phase angle and the phase of the fifth switching transistor to lag behind the phase of the fourth switching transistor by a fourth phase angle; and
control, when the electrical data of the transformer is less than or equal to the threshold, the phase of the first switching transistor lags behind the phase of the fourth switching transistor by the second phase angle, and the phase of the fifth switching transistor lags behind the phase of the fourth switching transistor by the fourth phase angle, the phase of the fourth switching transistor to lag behind the phase of the first switching transistor by the first phase angle and the phase of the fifth switching transistor to lag behind the phase of the first switching transistor by the third phase angle.

4. The power conversion apparatus according to claim 3, wherein the third phase angle is the same as the fourth phase angle.

5. The power conversion apparatus according to claim 3 or 4, wherein the power conversion apparatus further comprises an inductor, and the inductor and the primary-side winding or the secondary-side winding are connected in series between the midpoint of the first bridge arm and the midpoint of the second bridge arm, or the inductor and the primary-side winding or the secondary-side winding are connected in series and then connected to the midpoint of the third bridge arm.

6. The power conversion apparatus according to claim 5, wherein the power conversion apparatus further comprises a first resonant capacitor and a second resonant capacitor, and the first resonant capacitor and the second resonant capacitor are connected in series and then connected in parallel to the third bridge arm; and the two ends of the primary-side winding are respectively connected to the midpoint of the first bridge arm and the midpoint of the second bridge arm, the secondary-side winding and the inductor are connected in series between the midpoint of the third bridge arm and a capacitor midpoint, and the capacitor midpoint is a connection point between the first resonant capacitor and the second resonant capacitor.

7. The power conversion apparatus according to claim 5, wherein the power conversion apparatus further comprises a first resonant capacitor and a second resonant capacitor, and the first resonant capacitor and the second resonant capacitor are connected in series and then connected in parallel to the third bridge arm; and the primary-side winding and the inductor are connected in series between the midpoint of the first bridge arm and the midpoint of the second bridge arm, the two ends of the secondary-side winding are respectively connected to the midpoint of the third bridge arm and a capacitor midpoint, and the capacitor midpoint is a connection point between the first resonant capacitor and the second resonant capacitor.

8. The power conversion apparatus according to claim 5, wherein the power conversion apparatus further comprises a first resonant capacitor and a second resonant capacitor, and the first resonant capacitor and the second resonant capacitor are connected in series and then connected in parallel to the third bridge arm; and the two ends of the primary-side winding are respectively connected to the midpoint of the third bridge arm and a capacitor midpoint, the secondary-side winding and the inductor are connected in series between the midpoint of the first bridge arm and the midpoint of the second bridge arm, and the capacitor midpoint is a connection point between the first resonant capacitor and the second resonant capacitor.

9. The power conversion apparatus according to claim 5, wherein the power conversion apparatus further comprises a first resonant capacitor and a second resonant capacitor, and the first resonant capacitor and the second resonant capacitor are connected in series and then connected in parallel to the third bridge arm; and the primary-side winding and the inductor are connected in series between the midpoint of the third bridge arm and a capacitor midpoint, the two ends of the secondary-side winding are respectively connected to the midpoint of the first bridge arm and the midpoint of the second bridge arm, and the capacitor midpoint is a connection point between the first resonant capacitor and the second resonant capacitor.

10. The power conversion apparatus according to claim 5, wherein the power conversion apparatus further comprises a fourth bridge arm, and the fourth bridge arm is connected in parallel to the third bridge arm; and the two ends of the primary-side winding are respectively connected to the midpoint of the first bridge arm and the midpoint of the second bridge arm, and the secondary-side winding and the inductor are connected in series between the midpoint of the third bridge arm and a midpoint of the fourth bridge arm.

11. The power conversion apparatus according to claim 5, wherein the power conversion apparatus further comprises a fourth bridge arm, and the fourth bridge arm is connected in parallel to the third bridge arm; and the primary-side winding and the inductor are connected in series between the midpoint of the first bridge arm and the midpoint of the second bridge arm, and the two ends of the secondary-side winding are respectively connected to the midpoint of the third bridge arm and a midpoint of the fourth bridge arm.

12. The power conversion apparatus according to claim 5, wherein the power conversion apparatus further comprises a fourth bridge arm, and the fourth bridge arm is connected in parallel to the third bridge arm; and the two ends of the primary-side winding are respectively connected to the midpoint of the third bridge arm and a midpoint of the fourth bridge arm, and the secondary-side winding and the inductor are connected in series between the midpoint of the first bridge arm and the midpoint of the second bridge arm.

13. The power conversion apparatus according to claim 5, wherein the power conversion apparatus further comprises a fourth bridge arm, and the fourth bridge arm is connected in parallel to the third bridge arm; and the primary-side winding and the inductor are connected in series between the midpoint of the third bridge arm and a midpoint of the fourth bridge arm, and the two ends of the secondary-side winding are respectively connected to the midpoint of the first bridge arm and the midpoint of the second bridge arm.

14. The power conversion apparatus according to any one of claims 10 to 13, wherein the power conversion apparatus further comprises a first resonant capacitor, and the primary-side winding or the secondary-side winding, the inductor, and the first resonant capacitor are connected in series between the midpoint of the first bridge arm and the midpoint of the second bridge arm, or the primary-side winding or the secondary-side winding and the first resonant capacitor are connected in series between the midpoint of the first bridge arm and the midpoint of the second bridge arm, or the primary-side winding or the secondary-side winding, the inductor, and the first resonant capacitor are connected in series between the midpoint of the third bridge arm and the midpoint of the fourth bridge arm, or the primary-side winding or the secondary-side winding and the first resonant capacitor are connected in series between the midpoint of the third bridge arm and the midpoint of the fourth bridge arm.

15. The power conversion apparatus according to any one of claims 5 to 14, wherein the inductor comprises leakage inductance of the transformer.

16. A control method for a power conversion apparatus, wherein the method comprises:
controlling, when electrical data of a transformer is greater than a threshold and a phase of a fourth switching transistor lags behind a phase of a first switching transistor by a first phase angle, the phase of the first switching transistor to lag behind the phase of the fourth switching transistor by a second phase angle; and
controlling, when the electrical data of the transformer is less than or equal to the threshold and the phase of the first switching transistor lags behind the phase of the fourth switching transistor by the second phase angle, the phase of the fourth switching transistor to lag behind the phase of the first switching transistor by the first phase angle, wherein both the first phase angle and the second phase angle are greater than or equal to 0° and less than or equal to 180°, wherein
the electrical data of the transformer comprises an input voltage, an input current, an output voltage, or an output current of the transformer; the method is applicable to the power conversion apparatus, the power conversion apparatus is configured to be connected between a direct current power supply and a power grid or a load for energy conversion, the power conversion apparatus comprises a first bridge arm, a second bridge arm, and the transformer, the transformer comprises a primary-side winding and a secondary-side winding, the first bridge arm comprises the first switching transistor and a second switching transistor that are connected in series, the second bridge arm comprises a third switching transistor and the fourth switching transistor that are connected in series, the first bridge arm and the second bridge arm are connected in parallel, and a midpoint of the first bridge arm and a midpoint of the second bridge arm are respectively connected to two ends of the primary-side winding or two ends of the secondary-side winding; and the first switching transistor is connected to the third switching transistor.

17. The method according to claim 16, wherein the first phase angle is the same as the second phase angle.

18. The method according to claim 16 or 17, wherein the power conversion apparatus further comprises a third bridge arm; the midpoint of the first bridge arm and the midpoint of the second bridge arm are respectively connected to the two ends of the primary-side winding, and a midpoint of the third bridge arm is connected to the secondary-side winding; or the midpoint of the first bridge arm and the midpoint of the second bridge arm are respectively connected to the two ends of the secondary-side winding, and a midpoint of the third bridge arm is connected to the primary-side winding; and the third bridge arm comprises a fifth switching transistor and a sixth switching transistor that are connected in series;
the controlling, when the electrical data of the transformer is greater than the threshold and the phase of the fourth switching transistor lags behind the phase of the first switching transistor by the first phase angle, the phase of the first switching transistor to lag behind the phase of the fourth switching transistor by the second phase angle comprises:
controlling, when the electrical data of the transformer is greater than the threshold, the phase of the fourth switching transistor lags behind the phase of the first switching transistor by the first phase angle, and a phase of the fifth switching transistor lags behind the phase of the first switching transistor by a third phase angle, the phase of the first switching transistor to lag behind the phase of the fourth switching transistor by the second phase angle and the phase of the fifth switching transistor to lag behind the phase of the fourth switching transistor by a fourth phase angle; and
the controlling, when the electrical data of the transformer is less than or equal to the threshold and the phase of the first switching transistor lags behind the phase of the fourth switching transistor by the second phase angle, the phase of the fourth switching transistor to lag behind the phase of the first switching transistor by the first phase angle comprises:
controlling, when the electrical data of the transformer is less than or equal to the threshold, the phase of the first switching transistor lags behind the phase of the fourth switching transistor by the second phase angle, and the phase of the fifth switching transistor lags behind the phase of the fourth switching transistor by the fourth phase angle, the phase of the fourth switching transistor to lag behind the phase of the first switching transistor by the first phase angle and the phase of the fifth switching transistor to lag behind the phase of the first switching transistor by the third phase angle.

19. The method according to claim 18, wherein the third phase angle is the same as the fourth phase angle.
